# EUROPÄISCHE PATENTSCHRIFT

(11) **EP 1 722 915 B1**
(45) Veröffentlichungstag und Bekanntmachung des Hinweises auf die Patenterteilung: **08.06.2016**
(21) Anmeldenummer: 05706209.3
(22) Anmeldetag: 04.03.2005
(51) Int. Cl.: B23K 9/095

(54) **ARBEITSBEKLEIDUNG FÜR SCHWEISSARBEITEN**
WORK CLOTHES FOR WELDING WORK
VETEMENT DE TRAVAIL POUR TRAVAUX DE SOUDAGE

(30) Priorität: 09.03.2004 AT 4052004
(43) Veröffentlichungstag der Anmeldung: 22.11.2006
(73) Patentinhaber: Fronius International GmbH, 4643 Pettenbach (AT)
(72) Erfinder: AIGNER, Gerald, A-4715 Taufkirchen an der Trattnach (AT); FRIEDL, Helmut, A-4621 Sipbachzell (AT); MAIR, Peter, A-4631 Krenglbach (AT)
(74) Vertreter: Ofner, Clemens
(86) Internationale Anmeldenummer: PCT/AT2005/000070
(87) Internationale Veröffentlichungsnummer: WO 2005/084867

(56) Entgegenhaltungen:
- EP-A- 1 253 695
- WO-A-00/57738
- WO-A-03/022503
- FR-A- 2 745 690
- FR-A- 2 829 050
- PATENT ABSTRACTS OF JAPAN Bd. 018, Nr. 258 (M-1606) 17 Mai 1994 & JP 06 039 549 A (MATSUSHITA ELECTRIC IND CO LTD) 15 Februar 1994
- PATENT ABSTRACTS OF JAPAN Bd. 008, Nr. 140 29 Juni 1984 & JP 59 039 473 A (HITACHI SEIKO KK) 03 März 1984

## Beschreibung

Die Erfindung betrifft eine Arbeitsbekleidung, zur Steuerung und/oder Regelung von Schweißanlagen, wie in den Oberbegriffen des Anspruchs beschrieben.

Auf dem Gebiet der Schweißtechnik sind aus dem Stand der Technik bereits Fernregeleinrichtungen zur Kommunikation mit Komponenten einer Schweißanlage bekannt, die in Art eines mobilen Bedienpultes ausgeführt sind, das von einer Person tragbar und ortsungebunden mitführbar ist. Eine derartige Fernregeleinrichtung ist beispielsweise aus der WO 03/022503 A1 bekannt.

Weiters sind im Stand der Technik bereits Kleidungsstücke bekannt, in denen unterschiedlichste elektrische Systeme integriert sind. Eine derartige Arbeitsbekleidung ist beispielsweise in der EP 1 253 695 A2 geoffenbart.

Die EP 1 253 695 A2 die den Oberbegriff des Anspruchs 1 offenbart, beschreibt ein System zur drahtlosen Übertragung elektrischer Leistung, sowie eine Kleidungsstück mit einem derartigen System. Dabei sind elektrische Schaltungen in Kleidungsstücken mit elektrischen Geräten und/oder elektrischen Schaltungen in anderen Kleidungsstücken drahtlos, bevorzugt induktiv, gekoppelt, wobei durch die Kopplung elektrische Leistung und gegebenenfalls Informationen übertragen werden. Bei den elektrischen Geräten handelt es sich dabei um portable Geräte, wie z.B. Audioabspielgeräte, Mobiltelefone, Datenspeicher, Navigationsgeräte, usw., die mit elektrischem Strom betrieben werden. Gemäß der EP 1 253 695 A2 ist es jedoch nur möglich, speziell für eine induktive Signalübertragung ausgerüstetes Gerät im Nahbereich einer Aufnahme bzw. einer induktiven Kopplungseinrichtung eines Kleidungsstückes zu betreiben.

Nachteilig bei den aus dem Stand der Technik bekannten Lösungen ist es, dass auf dem Gebiet der Schweißtechnik unterschiedliche Komponenten einer Schweißanlage, beispielsweise eine Schweißstromquelle, eine Ein- bzw. Ausgabeeinrichtung für ein Schweißgerät, eine Steuereinrichtung für die Schweißanlage, usw., bisher nur über ein baulich eigenständiges, stationäres Bedienpult ansprechbar sind, sodass für eine Person merkliche Einschränkungen in dessen Handlungsfreiheit vorliegen. Weiters ist bei den aus dem Stand der Technik bekannten, elektronischen Systemen für Kleidungsstücke der Aufbau einer direkten Kommunikationsverbindung mit unterschiedlichen Komponenten einer industriellen Fertigungseinrichtung wie z.B. einer Schweißanlage, zur Einflussnahme auf diese ohne eine Zusatzeinrichtung nicht möglich.

Weiters sind auf dem Gebiet der Schweißtechnologie Arbeitsbekleidungen bekannt, die ein oder mehrere Schutzzonen aus wärme- und/oder UV-beständigem Material zur Abschirmung oder Verringerung dieser Strahlungen aufweisen. Von Nachteil ist bei diesen Arbeitsbekleidungen für Schweißarbeiten, dass ein Schutz einer Person vor weiteren Arten von Emissionen, die durch eine Schweißanlage bei Schweißprozessen erzeugt werden, insbesondere elektrische und/oder magnetischen Felder, nicht möglich ist. Im Bereich von elektrischen Schweißanlagen treten elektrische und magnetische Strahlungen im Bereich der stromführenden Leitungen in verstärktem Maße auf, weshalb Schweißarbeiten durchführende Personen der Wirkung dieser möglicherweise gesundheitsschädigenden Felder besonders ausgesetzt sind. Mit den im Stand der Technik bekannten Arbeitsbekleidungen ist eine Abschwächung dieser Felder, insbesondere der Magnetfelder, aufgrund des Fehlens geeigneter Vorrichtungen nicht möglich und es ist die Person unvermindert der wirkenden, magnetischen bzw. elektrischen Strahlung ausgesetzt. Bei Schweißanlagen ist besonders problematisch, dass eine Verminderung der magnetischen Feldstärken durch Einhaltung eines Abstandes zum Felderzeuger nicht oder nur mit unkomfortablen Maßnahmen möglich ist, da die stromführenden Leitungen in den Bereich des Schweißbrenners münden, der oftmals händisch von der Person geführt wird.

Es sind im Stand der Technik weiters Sensoren zur Erfassung unterschiedlicher Arten von Parametern, beispielsweise Temperatur, Schall, usw., bekannt, die Teile von eigenständigen Messsystemen bzw. Messgeräten sind. Es ist Faktum, dass im Bereich von Schweißanlagen eine starke Veränderung der Umgebungsbedingungen erfolgt, wobei Zustandsgrößen bzw. Parameter, wie die Gaszusammensetzung im Raum, die Temperatur, ein Schallpegel, elektrische oder magnetische Strahlung, Schwebepartikel usw. die Umgebung verändern und diese Umgebungsparameter bei unzulässigen Konzentrationen oder Werten eine erhöhte körperliche Belastung für eine Person im Bereich der Schweißanlage verursachen. Bei Nichtbeachtung von vorbeugenden Maßnahmen zur Vermeidung gesundheitsschädigender Umgebungsbedingungen besteht daher eine erhöhtes Gesundheitsrisiko für Personen im Bereich von Schweißanlagen. Um eine Gesundheitsgefährdung in der Schweißumgebung festzustellen, ist es im Stand der Technik in nachteiliger Weise notwendig, dass die Person eigenständige Messsysteme mit sich führt, die eine Überwachung bzw. Analyse der Umgebungsbedingungen zur Feststellung gesundheitsgefährdender Zustände vornehmen. Der Bedienungskomfort von Schweißanlagen und die Produktivität von Schweißprozessen wird durch den erhöhten Aufwand eingeschränkt und es ist mit dem aus dem Stand der Technik bekannten Messsysteme nicht möglich, aktiv in den Schweißprozess einzugreifen, um die Umgebungsparameter zu verändern.

Aufgabe der Erfindung ist es gemäß Anspruch 1 eine Arbeitsbekleidung zu schaffen, mit denen der Benutzungs- bzw. Bedienkomfort von Schweißanlagen für diese bedienende Personen verbessert wird. Gegebenenfalls ist es eigenständige Aufgabe der Erfindung, eine Arbeitsbekleidung bzw. eine Schweißanlage zu schaffen, mit der ein umfassenderer Schutz bzw. eine Vorsorge für eine Person vor durch eine Schweißanlage bzw. einen Schweißprozess ausgehenden Gesundheitsgefährdungen möglich ist.

Die Aufgabe der Erfindung wird durch die im kennzeichnenden Teil des Anspruchs 1 angeführten Merkmale jeweils eigenständig gelöst. Durch derartige Merkmalskombinationen wird der Vorteil erreicht, dass die Bedienung von Schweißanlagen und Überwachung von Schweißprozessen für einen Schweißer bzw. Benutzer durch die Zusammenführung von grundsätzlich durch Personen getragene Arbeitsbekleidung mit einem Fernregler vereinfacht wird, da auf ein zusätzliches, zum Arbeitsbekleidung externes Bediengerät verzichtet werden kann. Die die Arbeitsbekleidung tragende Person ist somit in ihrem Aktionsumfang nicht eingeschränkt. Somit ist beispielsweise möglich parallel zum Bedienvorgäng der Schweißanlage weitere Arbeiten durchzuführen, sodass beispielsweise während der Durchführung einer manuellen Schweißung durch eine Person gleichzeitig eine Bedienung einer Schweißanlage bzw. ein Ablesen von Parametern mittels dem Arbeitsbekleidung möglich ist.

Durch die in zumindest in einem der Ansprüche 3 bis 5 angeführten Merkmale ist es von Vorteil, dass mit Hilfe der Bedieneinrichtung des Fernreglers Einstellungen zur Beeinflussung einer Schweißanlage vorgenommen werden können und weiters Schweißparameter, Betriebsarten, Funktionen usw. an der Bedieneinrichtung ablesbar bzw. abrufbar sind, wodurch eine. Bedienung zur Steuer- und/oder Regelung bzw. Überwachung von Schweißanlagen möglich ist.

Vorteilhaft sind auch Merkmale nach zumindest einem der Ansprüche 6 und 7, da mit dem Übertragungselement unterschiedliche, aus dem Stand der Technik bekannte Signalübertragungsverfahren zum Übertragen von elektrischer Leistung und/oder von Informations- bzw. Datensätzen durchführbar sind.

Mit den in Anspruch 8 beschriebenen Merkmalen ist es möglich Signale bzw. Datensätze in durch die Steuereinrichtung definierter Weise zu verarbeiten, wobei auch in der Speichereinrichtung hinterlegte Programmlogiken, in denen beispielsweise Typ- Definitionen von Schweißanlagen oder Parameterdefinitionen von Schweißprozessen festgelegt sind, verarbeitbar sind.

Eine Ausgestaltung nach Anspruch 9 ist vorteilhaft, da der Fernregler bedarfsweise austauschbar ist und somit beispielsweise für unterschiedliche Typen von Schweißanlagen unterschiedliche Fernregler verwendbar sind. Weiters ist eine dauerhafte Integration des Fernreglers in der Arbeitsbekleidung beschrieben, sodass sich der Vorteil einer unkompliziert zu handhabenden baulichen Einheit ergibt.

Die in zumindest einem der Ansprüche 10 oder 11 angeführten Merkmale beschreiben mögliche Arten von Arbeitsbekleidungen, die zur Bildung einen vorteilhaften, baulichen Einheit mit dem Fernregler vorgesehen sein können.

Gemäß den Merkmalen von zumindest einem der Ansprüche 12 bis 15 kann der Fernregler in einem Arbeitsbekleidung integriert werden, wobei die Einstellorgane bzw. die Ausgabeeinrichtung für eine Person einfach identifizierbar ist und die Bedieneinrichtung somit in einfacher Weise für eine Person handhabbar ist. Hierzu sind weiters vorteilhafte Ausgestaltungen von Aufnahmeanordnungen zur Halterung bzw. Befestigung des Fernreglers in der Arbeitsbekleidung angeführt.

Eine vorteilhafte Weiterbildung wird auch in zumindest einem der Ansprüche 16 und 17 beschrieben, wobei ein einfaches Befestigen und Entfernen des Fernreglers an bzw. von der Arbeitsbekleidung möglich ist.

Die Merkmale gemäß Anspruch 18 sind Vorteilhaft, da einer Person die Bedienung der Bedieneinrichtung durch den Einstellorganen zugeordneten optischen Kennzeichnungen erleichtert wird.

Eine Ausgestaltung nach zumindest einem der Ansprüche 19 und 20 ist von Vorteil, da der Fernregler keine eigene Energieversorgung aufweisen muss und/oder mit elektrische Schaltungen, beispielsweise einem Transponder oder dergleichen, in Wirkungsverbindung gebracht werden kann. Weiters ist es möglich, dass der Fernregler bei Herstellung einer Verbindung mit dem Fernregler automatisch aktiviert wird und betriebsbereit ist.

Die Merkmale nach zumindest einem der Ansprüche 20 bis 23 sind vorteilhaft, da die entweder dem Fernregler oder der Komponente zugeordnete Energieversorgungseinrichtung als autarke Energiequelle ausgebildet sein kann, wodurch der Fernregler zur Energieversorgung nicht stationär gebunden sein muss. Durch elektromechanische oder thermoelektrische Energiewandler als Energieversorgungseinrichtung können unverbrauchbare bzw. eigenversorgte, autarke Energiequellen verwendet werden, wodurch kein Wartungsaufwand entsteht.

Die Merkmale nach zumindest einem der Ansprüche 24 und 25 sind vorteilhaft, da durch eine fremdgespeiste Energiequelle, wie ein sekundärseitiges Induktionselement, mit einem batterielosen Fernregler eine Energie- bzw. Informationsübertragung möglich ist. Weiters ist es mittels magnetischer Kopplung möglich, dass eine automatische Signalübertragung zwischen dem sekundärseitigen Induktionselement und dem Erregerelements in dessen Nahbereich stattfinden kann. Weiters ist ein derartiges sekundärseitiges Induktionselement, z.B. eine elektrische, flache Spule mit Radialwicklungen, gegen äußere mechanische Einflüsse unempfindlich und wartungsfrei.

Nach zumindest einem der Ansprüche 26 und 27 wird in vorteilhafter Weise durch einen in einem Arbeitsbekleidung integrierten Kennwertgeber, insbesondere Transponder, eine Berechtigungsvergabe, Datenprotokollierung, Personenidentifikation oder dgl. an Schweißanlagen ermöglicht, wobei der Kennwertgeber bzw. Transponder geringe bauliche Abmaße und einen flexiblen Aufbau besitzt und ohne Einschränkungen zu verursachen in eine Arbeitsbekleidung integrierbar ist.

Durch die Merkmale nach zumindest einem der Ansprüche 28 bis 32 kann über die Kommunikationseinrichtung eine Kommunikationsverbindung mit der Schweißanlage nicht zugehörigen Gegenstellen, beispielsweise einem Kommunikationsnetzwerk oder einem weiteren Gerät, hergestellt werden, wodurch die Daten bzw. Parameter des Fernreglers mittels aus dem Stand der Technik bekannten computerisierten Einrichtungen ausgelesen werden können und z.B. über ein Datennetzwerk abgefragt werden können.

Die Merkmale nach zumindest einem der Ansprüche 33 bis 35 sind von Vorteil, da durch die Verwendung von flexiblen bzw. verformbaren Materialien für die unterschiedlichen Elemente bzw. Module des Fernreglers eine Integration in textile Arbeitsbekleidungen, die faltbar, waschbar, usw., sind, ermöglicht wird.

Die Merkmale nach zumindest einem der Ansprüche 36 und 37 sind von Vorteil, da durch die spezielle Ausbildung des Fernreglers zur Kommunikation mit nur einem speziellen Typ einer Schweißanlage der Fernreglers nur die notwendigen Einstellmöglichkeiten für die typenspezifischen Schweißprozesse aufweisen kann und die Bedienung somit einfach gehalten werden kann. Durch eine automatische oder gegebenenfalls manuelle Konfigurierung der Einstellmöglichkeiten in Abhängigkeit des mit dem Fernregler kommunizierenden Typs der Schweißanlage wird derselbe Vorteil erreicht, wobei der Fernregler ein Mittel, insbesondere eine Programmlogik, mit in diesem hinterlegten, unterschiedlichen Typdefinitionen bzw. Spezifikationen aufweisen kann und dieser somit für unterschiedliche Typen von Schweißanlagen verwendbar ist.

Die Ausgestaltung nach Anspruch 38 ist vorteilhaft, da mittels mehreren Fernreglern an einer Arbeitsbekleidung unterschiedliche Schweißgeräte angesprochen werden können.

Die Merkmale nach zumindest einem der Ansprüche 39 bis 42 sind von Vorteil, da mit einer Komponente, die zur Signal- und/oder Datenübertragung mit dem Fernregler ausgeführt ist, für eine Person, die zur Einstellung der Komponenten vorgesehen ist, dieser Vorgang erleichtert wird.

Weiters ist ein System nach zumindest einem der Ansprüche 43 bis 47 vorteilhaft, da mit einem derartigen System, bestehend aus einer Komponente und einer Schweißanlagen sowie einem Arbeitsbekleidung bzw. Fernregler, die Einstellung bzw. Überwachung der Schweißanlage für eine Person erleichtert wird und effizienter und somit kostengünstiger gestaltet werden kann.

Die Erfindung wird im nachfolgenden anhand der in den schematischen Zeichnungen dargestellten Ausführungsbeispiele näher erläutert.

Es zeigen:
- Fig. 1: eine Schweißanlage zur Verwendung mit einer erfindungsgemäßen Arbeitsbekleidung in schematischer Seitenansicht;
- Fig. 2: eine Ausführungsvariante der Arbeitsbekleidung sowie eines Systems mit einer Bedieneinrichtung in schematischer Seitenansicht;
- Fig. 3: ein Blockschaltbild einer möglichen Ausführungsvariante eines Fernreglers in einer Arbeitsbekleidung;
- Fig. 4: ein Teilbereich eines Arbeitsbekleidung mit einer Ausführungsvariante des Fernreglers in Bruchdarstellung;
- Fig. 5: der Teilbereich der Arbeitsbekleidung nach Fig. 4 geschnitten nach den Linien V-V in Fig. 4;
- Fig. 6: ein. Teilbereich eines Arbeitsbekleidung mit dem Fernregler mit einer Verbindungseinrichtung zur lösbaren Befestigung;
- Fig. 7: eine Arbeitsbeldeidung bzw. System mit dem Fernregler zur drahtlosen Signalübertragung mit einer Komponente der Schweißanlage in schematischer Seitenansicht;
- Fig. 8: das Arbeitsbekleidung bzw. das System nach Fig. 7 in Draufsicht;
- Fig. 9: eine Ausführungsvariante des Fernreglers zur Verwendung mit unterschiedliche Arten von Arbeitsbekleidungen;
- Fig. 10: eine eigenständige Ausgestaltung einer Arbeitsbekleidung mit einer Schutzeinrichtung in Vorderansicht;
- Fig. 11: die Arbeitsbeldeidung nach Fig. 10 geschnitten nach den Linien XI-XI;
- Fig. 12: die Arbeitsbekleidung nach Fig. 10 geschnitten nach den Linien XII-XII;
- Fig. 13: ein Teilabschnitt der Arbeitsbekleidung mit einer möglichen Ausgestaltung der Schutzeinrichtung in Schnittdarstellung;
- Fig. 14: ein Teilabschnitt der Arbeitsbekleidung mit einer weiteren, möglichen Ausgestaltung der Schutzeinrichtung in Schnittdarstellung;
- Fig. 15: ein Teilabschnitt der Arbeitsbekleidung mit einer weiteren, möglichen Ausgestaltung der Schutzeinrichtung in Bruchdarstellung;
- Fig. 16: eine eigenständige Ausgestaltung einer Arbeitsbekleidung bzw. einer Schweißanlage mit einer Analyseeinrichtung in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

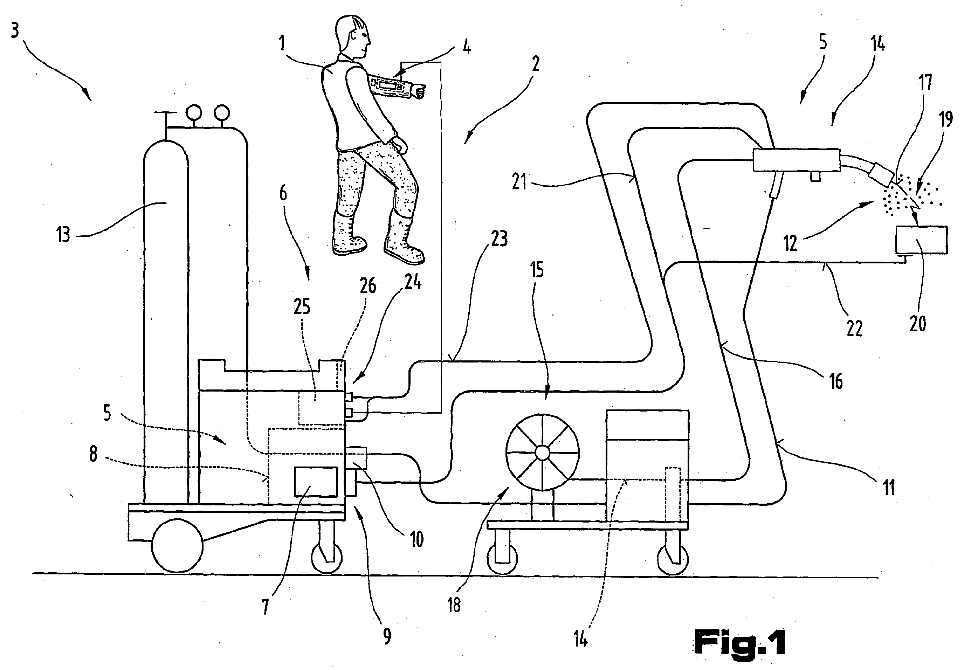

In der Fig. 1 ist eine Arbeitsbekleidung 1 für eine Person 2, insbesondere einen Benutzer bzw. Bediener einer Schweißanlage 3, dargestellt. Die Arbeitsbekleidung 1 ist mit einem elektrischen Signalübertragungssystem, das beispielsweise einen Fernregler 4, einen Sensor, eine Energieversorgung oder weitere elektrische Schaltungen aufweist, oder mit einer mechanischen Schutzeinrichtung ausgestattet.

Der Begriff Arbeitsbekleidung 1 umfasst sämtliche Arten von durch eine Person 2 tragbaren Kleidungsstücken, die insbesondere speziell für Schweißarbeiten ausgebildet sind, d.h. Bereiche aus hitzefesten, feuerfesten oder schwer entflammbare bzw. gegen ultraviolette Strahlung beständige Materialien aufweisen. Beispielsweise ist die Arbeitsbekleidung 1 als Handschuh, Schuh, Hose, einem jacken-, mantel- oder pulloverartigen Oberhemd, einem ein- oder mehrteiligen Overall, einer Strahlungsschutzeinrichtung für das Gesichtsfeld einer Person, insbesondere einem Augenschutzschirm, einer Schutzbrille, Kappe, einein Trageband oder dgl., wobei die Arbeitsbekleidung bevorzugt speziell für Schweißarbeiten vorgesehen ist. Die Arbeitsbekleidung 1 kann zumindest teilweise aus Textilgewebematerial wie Baumwolle oder Polyester gebildet sein, wobei selbstverständlich sämtliche aus dem Stand der Technik auf dem Gebiet der Bekleidungs- bzw. Textiltechnik, insbesondere dem Gebiet der Schweißbekleidung bzw. Schutzbekleidung, bekannte Materialien verwendbar sind.

Mögliche Arten von Komponenten 5, die eine Schweißanlage 3 umfassen kann, werden im Nachfolgenden beschrieben. So kann die Schweißanlagen 3 zur Durchführung eines aus dem Stand der Technik bekannten Schweißverfahrens, beispielsweise eines MIG/MAG-; TIG-, WIG-, Stabelektroden-, Laserschweiß- Verfahrens oder dergleichen, ausgebildet sein und hierzu eine Stromquelle 6, die ein Leistungsteil 7 und eine Steuereinrichtung 8 und einem dem Leistungsteil 7 bzw. der Steuereinrichtung 8 zugeordnetes Umschaltglied 9, aufweisen. Das Umschaltglied 9 bzw. die Steuereinrichtung 8 ist mit einem Steuerventil 10 verbunden, welches in einer Versorgungsleitung 11 für ein Gas, insbesondere einem Schutzgas, wie beispielsweise Stickstoff, Helium oder Argon und dgl., zwischen einem Gasspeicher 13 und einem Schweißbrenner 14 angeordnet ist. Zudem kann über die Steuereinrichtung 8 auch ein Drahtvorschubgerät 15 angesteuert werden, wobei über eine Versorgungsleitung 16 ein Schweißdraht 17 von einer Vorratstrommel 18 dem Bereich des Schweißbrenners 17 zugeführt wird. Die Energie zum Aufbau eines Lichtbogens 19 zwischen dem Schweißdraht 17 und einem Werkstück 20 wird über Schweißleitungen 21, 22 vom Leistungsteil 7 der Stromquelle 6 dem Schweißbrenner 14 bzw. dem Schweißdraht 17 zugeführt, wobei ein erstes, z.B. positives Potential, insbesondere über die Schweißleitung 21 der Stromquelle 6 am Schweißdraht 17 anliegt und das weiter, z.B. negative, Potential, insbesondere über die weitere Schweißleitung 22 am Werkstück 20 anliegt.

Zum Kühlen des Schweißbrenners 14 kann dieser über einen Kühlkreislauf 23 unter Zwischenschaltung eines Strömungswächters 24 mit einem Kühlmittelbehälter 25, insbesondere einem Wasserbehälter, verbunden sein, sodass bei der Inbetriebnahme des Schweißbrenners 14 der Kühlkreislauf 23 von der Steuereinrichtung 8 gestartet werden kann, wodurch eine Kühlung des Schweißbrenners 14 erreicht wird.

Weiters kann die Schweißanlage 3 eine Ein- und/oder Ausgabeeinrichtung 26 aufweisen, die z.B. aus Bedienelementen, einer Tastatur und/oder einem Anzeigeelement, wie z.B. einem Bildschirm oder einem Display, besteht, mit der die unterschiedlichsten Schweißparameter bzw. Betriebsarten der Schweißanlage 3 eingestellt werden können. Dabei werden die über die Ein- und/oder Ausgabeeinrichtung 26 eingestellten bzw. ausgewählten Werte, insbesondere schweißspezifische Parameter, an die Steuereinrichtung 8 weitergeleitet, sodass anschließend von der Steuereinrichtung 8 die einzelnen Komponenten entsprechend der vorgegebenen Werte bzw. den aus diesen Werten ermittelten Steuerungsfunktionen bzw. Steuersignalen aktiviert werden können.

Eine eigenständige, erfindungsgemäße Lösung betrifft die Arbeitsbekleidung 1, dessen Signalübertragungssystem den Fernregler 4 umfasst bzw. den Fernregler 4 alleine, der mit einer Komponente 5 der Schweißanlage 3 zur Steuerung und/oder Regelung bzw. Überwachung derselben in elektrische Wirkungsverbindung bringbar ist. Elektrische Wirkungsverbindung bedeutet, dass die Durchführung einer uni- oder bidirektionalen Signalübertragung stattfinden kann, wobei hierbei die Übertragung von Informationen bzw. Daten und/oder die Übertragung von elektrischer Leistung, also Spannung und Strom, erfolgen kann und diese Signalübertragung drahtlos oder drahtgebunden durchgeführt wird.

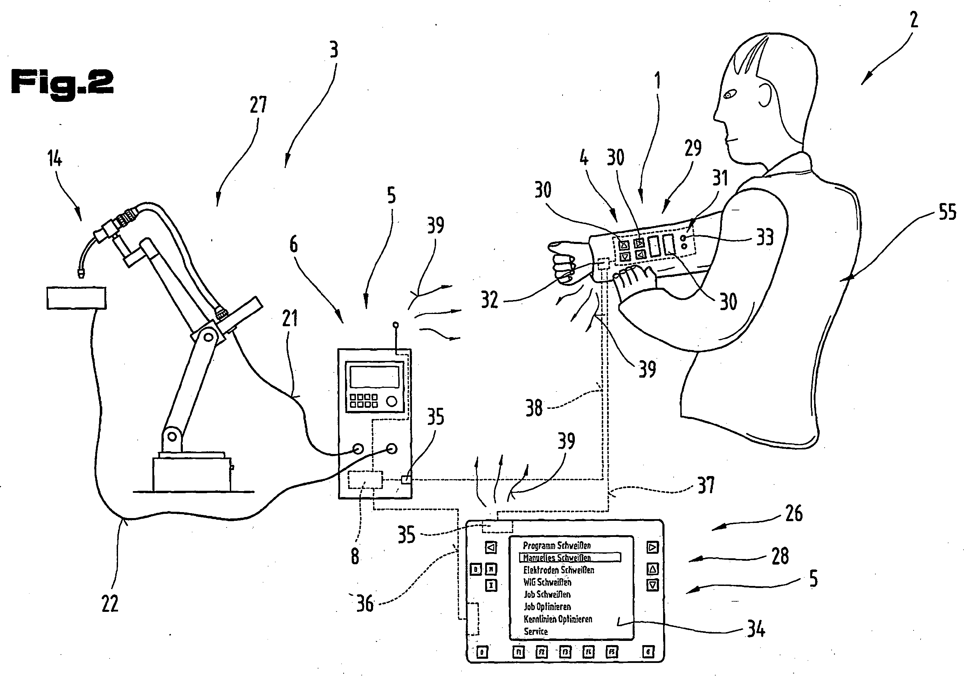

In der Fig. 2 ist die erfindungsgemäße Arbeitsbekleidung 1 mit dem Fernregler 4 für schweißtechnische Steuerungs- bzw. Regelungszwecke oder Überwachungszwecke, sowie eine mit dem Fernregler 4 in Kommunikationsverbindung stehende, zur automatisierten Fertigung von Schweißverbindungen dienende Schweißanlage 3 näher dargestellt. Bei derartigen Schweißanlagen 3 werden Bewegungsabläufe des Schweißbrenners 14 von einem Manipulator eines Robotersystem 27 vorgenommen, wobei die Konfigurierung von Parametern, Funktionen, Betriebsarten, Schweißteilgeometrien, Bewegungsbahnen, usw., der Fertigungsanlage bzw. Schweißanlage 3 von einer Person 2 durchgeführt wird. Hierzu werden von dem elektrischen Femregler 4 an die Stromquelle 6 bzw. die Ein- und/oder Ausgabeeinrichtung 26, insbesondere ein Einstellpult 28 für das Schweißgerät oder aber auch dem Robotersystem 27, entsprechende Steuersignale bzw. Daten übermittelt.

Es ist dem elektrischen Fernregler 4 in einer bevorzugten Ausführungsvariante eine Bedieneinrichtung 29 zugeordnet, an der unterschiedliche Einstellungen ein oder mehrere Komponenten 5 der Schweißanlage 3 vorgenommen werden können. Die Bedieneinrichtung 29 weist dazu ein oder mehrere Einstellorgane 30 und/oder eine Ausgabeeinrichtung 31 auf. Der Fernregler 4 weist weiters eine elektrische Schnittstelle 32 auf, über die eine Kommunikationsverbindung mit den Komponenten 5 der Schweißanlage 3 herstellbar ist. Es sind die Einstellorgane 30 bzw. die Ausgabeeinrichtung 31 mit der Schnittstelle 32 elektrisch wirkungsverbunden, d.h. dass bei Aktivierung bzw. Betätigung eines Einstellorgans 30 an die Schnittstelle 32 ein Signal bzw. ein individueller Kennwert für das jeweilige Einstellorgan 30 übermittelt wird und dieser Kennwert bzw. ein aus diesem generierter Wert in weiterer Folge mittels der Schnittstelle 32 an die gewünschte Komponente 5 der Schweißanlage 3 übermittelt wird.

Eine weitere Möglichkeit besteht darin, dass von einer der Komponenten 5 an die Schnittstelle 32 des Fernreglers 4 ein Signal, welches beispielsweise den aktuellen Zustand der Schweißanlage repräsentiert, d.h. aktiver Schweißprozess oder Stillstandszeit, Schweißparameter oder dgl., übersendet wird, worauf die Ausgabeeinrichtung 31 in Abhängigkeit dieses Signals zur Signalisierung des Zustandes der Schweißanlage 3 angesteuert bzw. aktiviert wird. Zwischen den Komponenten 5 einer Schweißanlage 3 sowie dem Fernregler 4 kann somit eine uni- oder bidirektionale Kommunikation, insbesondere Signal- und/oder Datenübertragung, erfolgen.

Als Einstellorgane 30 können aus dem Stand der Technik bekannte Schalteinrichtungen, beispielsweise Taster, Dreh- bzw. Schieberegler, Kippschalter, eine elektrische Ortserfassung, insbesondere Touchscreen, usw., vorgesehen sein. Die Ausgabeeinrichtung 31 kann durch optische Anzeigemittel 33, beispielsweise Leuchtmittel, wie Glühdrahtlampen, LED's und/ oder Displays wie LCD- oder TFT- Bildschirme, oder als akustischer Signalgeber, Vibrationssignalgeber oder dgl. ausgebildet sein.

Wie in Fig. 2 dargestellt, ist es mittels dem Fernregler 4 an der Arbeitsbekleidung 1 nunmehr möglich, über die Bedieneinrichtung 29 Einstellungen an der Schweißanlage 3 vorzunehmen, wobei die hierzu notwendigen Einstellorgane 30 bzw. Ausgabeeinrichtungen 31 der Bedieneinrichtung 29 an der Arbeitsbekleidung 1 lösbar oder dauerhaft an dieser angeordnet oder in dieser integriert sind. Durch die bauliche Kombination des Fernreglers 4 mit der Arbeitsbekleidung 1 kann eine Person 2 Einstellungen an einer mit dem Fernregler 4 in Wirkverbindung stehenden Komponente 5 der Schweißanlage 3 vornehmen, wobei hierzu keine Einstellungen an der stationären Ein- und/oder Ausgabeeinrichtung 26 getroffen werden müssen, wie dies im Stand der Technik bisher der Fall war.

Anhand der in Art eines Einstellpultes 28 an der Schweißanlage 5 vorgesehenen Ein- und/ oder Ausgabeeinrichtung 26 ist in Fig. 2 die Möglichkeit einer Beeinflussung bzw. Konfiguration der Schweißanlage 3 mittels dem Fernregler 4 dargestellt.

Durch die Vornahme von Einstellungen an der Bedieneinrichtung 29 des Fernreglers 4 können Parameter bzw. Menüpunkte an der Ein- und/oder Ausgabeeinrichtung 26 der Schweißanlage 3 verändert werden, wobei hierzu am Einstellpult 28 an einem Display 34 oder anderen Anzeigeorganen die Einstellungsmöglichkeiten visualisiert sind, insbesondere virtuelle Menüführung vorgesehen ist. Selbstverständlich kann über den Fernregler 4 eine Steuereinrichtung 8 der Schweißstromquelle 6 zur Vorgabe bzw. Abfrage von Parameter der Schweißanlage 3 direkt angesprochen werden.

Den Einstellorganen 30 des Fernreglers 4 sind entsprechende Steuerungsfunktionen zugewiesen bzw. manuell zuweisbar, die an der Komponente 5 verarbeitet werden. Die Einstellorgane 30 können beispielsweise in Art von Navigations-, Auswahl-, Bestätigungs- oder Abbruchtasten, usw., vorgesehen sein oder es können diesen manuell Funktionen zugewiesen werden, wobei die jeweiligen Einstellorgane 30 repräsentative Signale bzw. Werte bei deren Betätigung generieren und diese Werte bzw. die aus diesen Werten vom Fernreglers 4 ermittelten Steuerungsfunktionen mittels der Schnittstelle 32 an eine mit dieser korrespondierende Schnittstelle 35 der Komponente 5 bzw. des Einstellpults 28 übermittelt werden und anschließend von einer der Schweißanlage 3 oder Komponente 5 zugeordneten Steuerungseinrichtung 8 ausgewertet werden. Nach abgeschlossenem Einstellvorgang über den Fernregler 4 können, insbesondere über eine Steuerleitung 36, der Schweißstromquelle 6, gegebenenfalls die Parameter für den Schweißprozess bzw. die Positionskoordinaten für die Robotersteuerung 27 übermittelt werden und es kann der eigentliche Arbeitsablauf für einen durchzuführenden Schweißprozess unabhängig vom Fernregler 4 oder unter fortlaufendem Signalaustausch zwischen Fernregler 4 und Komponente 5 gestartet werden.

In Fig. 2 sind in strichlierten Linien Kommunikationsleitungen 37, 38 dargestellt, die die e-lektrische Wirkungsverbindung des Fernreglers 4 mit den Komponenten 5 der Schweißanlage 3 symbolisieren. Die Kommunikationsverbindung zwischen dem Fernregler 4 und der Komponente 5 kann über ein aus dem Stand der Technik bekanntes Übertragungsverfahren erfolgen, beispielsweise - wie symbolisch durch die Pfeile 39 dargestellt - drahtlos mittels Funk, Infrarot, magnetischer Induktion, oder drahtgebunden über Leitungen zur analogen bzw. digitalen Signalübertragung. Der Fernregler 4 kann über die Schnittstelle 32 eine einzelne Schnittstelle 35 einer Komponente 5 der Schweißanlage 3 ansprechen oder mit mehreren Schnittstellen 35 unterschiedlicher Komponenten 5, beispielsweise zwei getrennte Stromquellen 6, kommunizieren, wobei hierzu den einzelnen Schnittstellen 35 zugeordnete Kennungen, Frequenzbereiche oder dergleichen über die Schnittstelle 32 übersendet werden können, um eine definierte Signalübertragung zwischen Komponenten 5 zu gewährleisten.

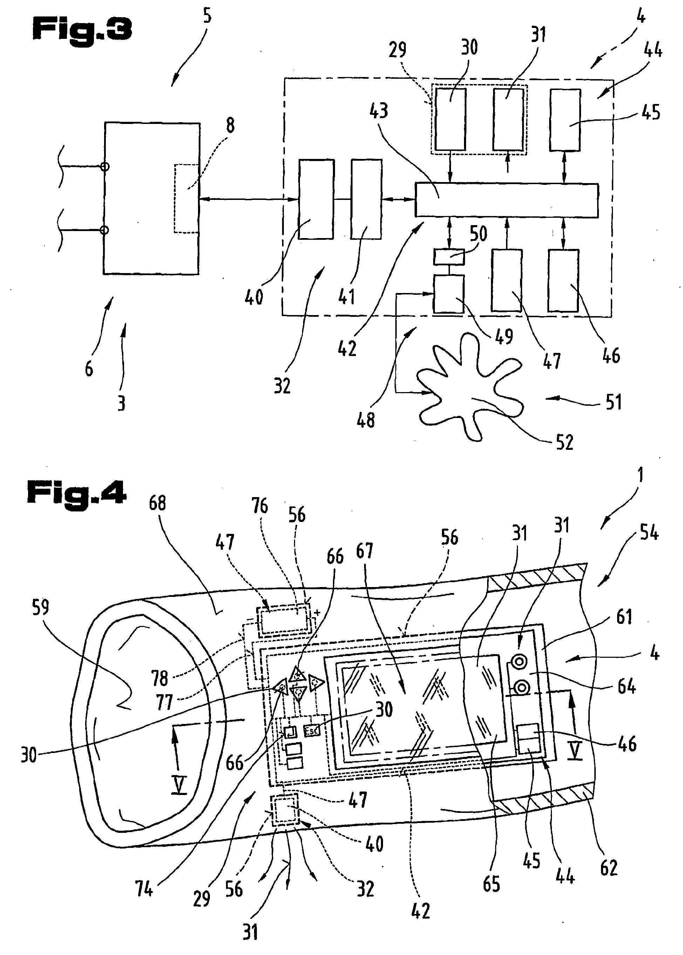

In Fig. 3 ist der prinzipielle Aufbau mit den einzelnen Modulen des Fernreglers 4 als Blockschaltbild dargestellt. Es weist der Fernregler 4 die Schnittstelle 32 auf, die ein physisches Übertragungselement 40 und gegebenenfalls einen Schnittstellentreiber 41 umfasst. Die Schnittstelle 32 ist an ein elektrisches Übertragungssystem 42 gebunden, wobei die Übertragungssystem 42 beispielsweise als Daten-Bussystem 43 zur digitalen Signalübertragung und zur Übertragung einer Versorgungsspannung ausgebildet ist. Es sei angemerkt, dass das Übertragungssystem 42 auch zur ausschließlichen Durchführung einer analogen Signalübertragung zur Übertragung von elektrischer Leistung über ein oder mehrere Leitungen ausgebildet sein kann, wobei jedoch zusätzlich eine Informationsübertragung durch die Kodierung von Spannungspegeln über ein Signalverarbeitungsmittel, z.B. über Modulations- bzw. Demodulationsmittel, möglich sein kann. Das Übertragungssystem 42 ist beispielsweise durch flache bzw. dünne Leiterschichten, insbesondere Kupfer-Leiterbahnen, ausgebildet, die an einem flexiblen Band, beispielsweise aus Kunststoff, angebracht sind, sodass ein flexibles Element zur elektrischen Signalübertragung ausgebildet wird, wie dies nachfolgend näher beschrieben wird oder es sind die Leiterschichten direkt in der Arbeitsbekleidung 1 integriert, beispielsweise in ein Innenfutter einer textilen Arbeitsbeldeidung 1 eingewebt oder in einem starren Abschnitt einer Arbeitsbekleidung 1 angeordnet, insbesondere eingeformt bzw. eingegossen, ist.

Es ist mit dem Übertragungssystem 42 weiters die Bedieneinrichtung 29, insbesondere das zumindest eine Einstellorgan 30 sowie die Ausgabeeinrichtung 31, verbunden. Weiters kann mit der Übertragungssystem 42 eine Steuereinrichtung 44 zur Durchführung von logischen Operationen, insbesondere ein Mikrokontroller 45, sowie eine Speichereinrichtung 46, insbesondere ein überschreibbarer ROM-Speicher oder dgl. oder ein weiterer, aus dem Stand der Technik bekannter digitaler, optischer oder magnetischer Speicher, verbunden sein. Zur Ermöglichung eines Betriebes des Fernreglers 4 kann diesem eine Energieversorgungseinrichtung 47 zur Erzeugung der notwendigen Betriebsspannung zugeordnet sein. Zusätzlich kann mit dem Übertragungssystem 42 eine Kommunikationseinrichtung 48, beispielsweise umfassend ein physisches Übertragungselement 49 sowie einen Schnittstellentreiber 50, verbunden sein, mit der eine Kommunikationsverbindung zu einer Gegenstelle 51, beispielsweise einem öffentlichen Kommunikationsnetzwerk 52, wie z.B. ein Internet, Ethernet oder dgl., oder einem Gerät 53 herstellbar ist.

Wie vorstehend bereits beschrieben, kann über die Schnittstelle 32 mit einer Komponente 5 der Schweißanlage 3, z.B. wie in Fig. 3 dargestellt mit der Steuereinrichtung 8 der Schweißstromquelle 6, zur Steuerung bzw. Regelung und/oder Überwachung eines Schweißprozesses eine Signal- und/oder Datenübertragung durchgeführt werden. Entsprechende Steuersignale werden dabei von den Einstellorganen 30 erzeugt und an das Übertragungssystem 42 übertragen und mittels einem der Steuereinrichtung 44 zugeordneten Taktgenerator, insbesondere dem Mikrokontroller 45, an die Schnittstelle 32 übertragen. Die Steuereinrichtung 32 kann mittels dem Schnittstellentreiber 41, welcher als durch den Mikrokontroller 45 verarbeitbare Software in der Speichereinrichtung 46 hinterlegt sein kann oder der als physische Treiberschaltung ausgebildet sein kann, eine Kodierung des Steuersignals in ein für die Komponente 5 verständliches Übertragungsprotokoll vornehmen, sodass eine Kompatibilität zwischen dem Fernregler 4 und der Komponente 5 gewährleistet ist. Beispielsweise können hierzu standardisierte Übertragungsverfahren wie beispielsweise Bluetooth™, WLAN (Wireless Local Area Network) oder dergleichen, verwendet werden. Es sei weiters die Möglichkeit einer drahtgebundenen Kommunikationsverbindung zwischen dem Fernregler 4 und einer Komponente 5 der Schweißanlage 3 angemerkt, wobei die Schnittstelle 32 hierzu beispielsweise zur Kommunikation mit industrielle Bus-Systemen wie z.B. Feldbus, CAN-Bus (Controller Area Network), Interbus-S, Profibus, usw. ausgebildet ist. Eine weitere Funktionalität des Fernreglers 4 kann darin bestehen, dass eine in der Speichereinrichtung 46 hinterlegte Programmlogik über die Schnittstelle 32 oder der Kommunikationseinrichtung 48 ausgelesen bzw. eine Programmlogik in die Speichereinrichtung 46 gespeichert werden kann, sodass Updates zur Aktualisierung von der in der Speichereinrichtung 46 hinterlegten Software durchführbar sind.

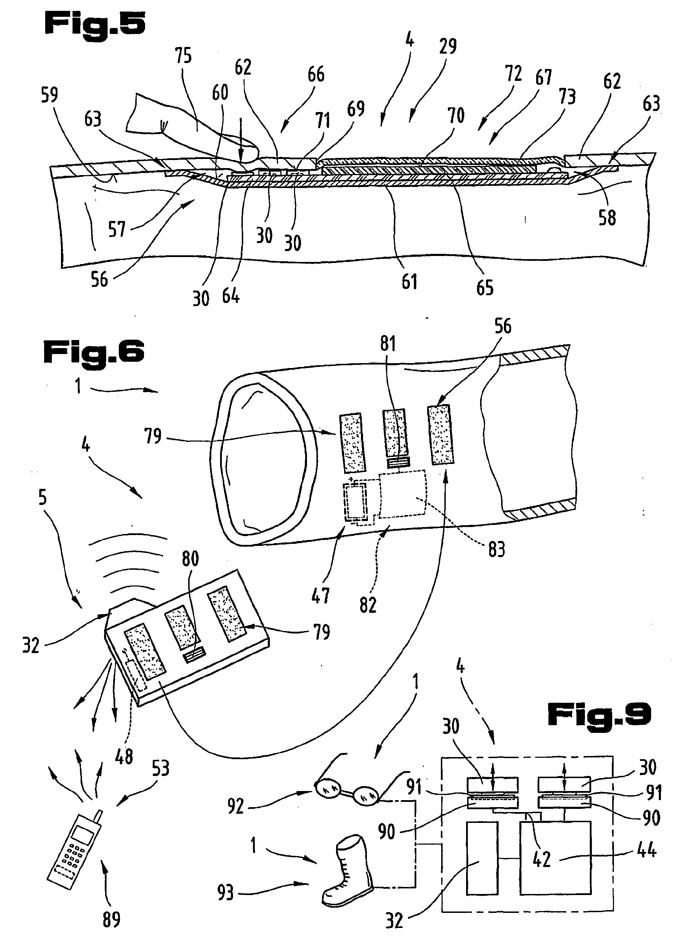

Die Kommunikation mittels der Kommunikationseinrichtung 48 und einer Gegenstelle 51 kann ähnlich wie vorstehend für die Schnittstelle 32 beschrieben erfolgen, wobei die Gegenstelle 51 keine Komponente der Schweißanlage 3 darstellt und dieser nicht zugehörig ist. Somit ist es beispielsweise möglich mittels der Kommunikationseinrichtung 48 direkt auf ein öffentliches Kommunikationsnetzwerk 52 zugegriffen werden kann,-wobei hierzu das Übertragungselement 49 durch ein aus dem Stand der Technik bekanntes Modem bzw. eine Sende- und/oder Empfangseinheit zur drahtlosen Funkdatenübertragung über ein Mobilfunknetzwerk vorgesehen ist und der Schnittstellentreiber 50 die internen Signale des Fernreglers 4 auf ein durch ein Übertragungsprotokoll definiertes Format umsetzt. Eine ebenso mögliche Ausführungsvariante, bei der mittels der Kommunikationseinrichtung 48 eine Kommunikationsverbindung mit dem elektrischen Gerät 53 aufgebaut wird, ist im Zuge der Fig. 6 an späterer Stelle näher beschrieben.

Zum Fernregler 4 sei im Allgemeinen angemerkt, dass dieser in unterschiedlichen Ausführungsvarianten lediglich aus Teilen der vorstehend beschriebenen bzw. in der Fig. 3 dargestellten Module bestehen kann bzw. nur Teile der Module im Arbeitsbekleidung 1 angeordnet sein können. Beispielsweise kann die Energieversorgungseinrichtung 47 extern zur Arbeitsbekleidung 1 in einer Komponente 5 der Schweißanlage 3 oder einem Gerät 53, die über Schnittstellen 32 bzw. 48 mit dem Fernregler 4 verbunden sind, angeordnet sein. Ebenso ist es möglich, dass die Energieversorgungseinrichtung 47 in der Arbeitsbekleidung 1 zur Bildung des Signalübertragungssystems angeordnet bzw. integriert ist und der Fernregler 4 lösbar mit der Energieversorgungseinrichtung 47 elektrisch koppelbar und/oder an der Arbeitsbekleidung 1 befestigbar ist. Module, die baulich getrennt zum Fernregler 4 ausgebildet sind, können über die Schnittstellen 32, 48 bzw. Koppelemente 80 (siehe Fig. 6) mit dem Fernregler 4 elektrisch verbunden werden. Derartige Ausführungsbeispiele sind an späterer Stelle beschrieben.

Die Fig. 4 und 5 zeigen einen Teilabschnitt der Arbeitsbekleidung 1, insbesondere eines Ärmels 54 eines Oberhemdes 55 (siehe Fig. 2), die eine mögliche Ausführungsvariante des Fernreglers 4 aufweist.

Das Arbeitsbekleidung 1 weist zur Halterung bzw. Positionierung des Fernreglers 4 eine oder mehrere Aufnahmeanordnungen 56 auf, an denen der Fernreglers 4 aufgenommen und befestigt ist. Wie am besten aus Fig. 5 ersichtlich, kann die Aufnahmeanordnung 56 beispielsweise in Art einer Aufnahmetasche 57 im Innenfutter der Arbeitsbekleidung 1 ausgebildet sein, die eine Aufnahmekammer 58 zwischen einer inneren Oberfläche 59 der Arbeitsbekleidung 1 und einer Begrenzungsfläche 60 einer Innenlage 61 ausbildet. Der Fernregler 4 verläuft somit zwischen einer äußeren Decklage 62 der Arbeitsbekleidung 1 und ein an der Decklage 62 angebrachten, bevorzugt textilen Innenlage 61. Es ist jedoch auch möglich, dass die Innenlage 61 durch eine starre bzw. schwer verformbare Platte, beispielsweise aus Kunststoff, Aluminium usw. besteht. In einem Verbindungsbereich 63 ist die Innenlage 61 an der Deckschicht 62 befestigt, wobei diese Befestigung mittels Verbindungsverfahren, wie textiles Vernähen, Verkleben, usw., dauerhaft sein kann oder diese Verbindung lösbar mittels Klett-, Knopf- bzw. Steckverbindungen oder dgl. ausgebildet sein kann.

Eine weitere Möglichkeit der Integration des Fernreglers 4 in das Arbeitsbekleidung 1 besteht darin, dass bei der Herstellung der Arbeitsbeldeidung 1 die Leiterbahnen des Übertragungssystems 42, sowie einzelnen Module des Fernreglers 4 dauerhaft eingebettet werden, sodass diese einen Teil der Deckschicht 62 des Arbeitsbekleidung 1 bilden. Bei textilem Material kann dies beispielsweise durch Einweben erfolgen, bei Kunststoffbekleidung durch Materialumhüllung während des Fertigungsprozesses.

Bei der in Fig. 4 und 5 dargestellten Ausführungsvariante eines Fernreglers 4 weist dieser eine Leiterplatte 64 mit dem elektrischen Übertragungssystem 42 auf, über das zumindest einige Module des Ferhreglers 4, beispielsweise die Einstellorgane 30, die Ausgabeeinrichtungen 31, die Schnittstelle 32 und die Energieversorgungseinrichtung 47 miteinander verbunden sind. Weiters ist es möglich, dass die Leiterplatte 64 über das Übertragungssystem 42 mit der Steuereinrichtung 44, insbesondere einem Mikrokontroller 45 und der Speichereinrichtung 46, an Anschlusspositionen verbunden ist, wobei der Mikrokontroller 45 und die Speichereinrichtung 46 hierzu als eigenständige Bauteile, die über Kontakte mit der Leiterplatte 64 verbunden sind, ausgebildet sein können. Eine weitere aus dem Stand der Technik bekannte Ausgestaltung von Mikrokontrollern 45 besteht darin, dass die integrierten Schaltkreise des Mikrokontrollers 45 direkt auf der Leiterplatte 64 ausgebildet sind, also der Mikrokontroller 45 bzw. die Speichereinrichtung 46 einen Bestandteil der Leiterplatte 64 bildet. Hierzu ist die Leiterplatte 64 bevorzugt aus einem flexiblen Material, beispielsweise einem polymeren Kunststoff, und in Art einer Folie ausgebildet, die durch ein aus dem Stand der Technik bekanntes Verfahren mit den integrierten Schaltkreisen eines Mikroprozessors versehen bzw. bedruckt wird, sodass Komponenten von elektronischen Geräten in einer derartigen, polymeren Kunststofffolie integriert sind. Es kann die Leiterplatte 64 weiters mit einem Display 65 ausgestattet sein, wobei dieses Display wiederum als eigenständiger Bauteil mit der Leiterplatte 64 über Kontakte verbindbar ist oder in der Leiterplatte 64 mittels Integration in diese eingebettet ist, beispielsweise als flexible Flüssigkristallanzeige oder dgl. ausgebildet ist. Dem auf dem Gebiet der Elektronik bzw. Integrationstechnik elektronischer Komponenten tätigen Fachmann sind Leiterplatten 64, die als multifunktionale Kunststofffolien ausgebildet sind und neben Mikroprozessoren bzw. Mikrochips auch Sender- bzw. Empfängerantennen, Spulen, Sensoren, ein Batterien usw. enthalten können bekannt, weshalb hierauf an dieser Stelle nicht näher eingegangen wird.

Durch eine derartige, flexible Leiterplatte 64 mit in dieser integrierten Module des Femreglers 4 wird der Tragekomfort eines Arbeitsbekleidung 1 für einen Benutzer 2 nicht bzw. nur geringfügig beeinträchtigt und es kann gegebenenfalls auch eine Reinigung des Arbeitsbekleidung 1, beispielsweise eine Nassreinigung mittels einer Waschmaschine oder Trockenreinigung durch Abbürsten oder dgl. ermöglicht werden, ohne dass der Fernregler 4 durch mechanische Beanspruchung beschädigt wird bzw. Teile derselben zu Bruch gehen.

Weiters können zumindest die Betätiguhgsbereiche 66 bzw . Anzeigebereiche 67 der Bedieneinrichtung 29 an einer äußeren Oberfläche 68 des Arbeitsbekleidung 1 frei zugänglich bzw. frei sichtbar angeordnet sein. Hierzu kann in dem Betätigungs- bzw. Anzeigebereichen 66, 67 die Deckschicht 62 des Arbeitsbekleidung 1 bereichsweise durchsichtig bzw. transparent ausgebildet sein, sodass auf eine innerhalb der Arbeitsbekleidung 1 angeordnete Anzeigefläche 70 und/oder Betätigungsflächen 71 der Ausgabeeinrichtung 31 und/oder Einstellorgane 30 Einsicht genommen werden kann. Die durchsichtigen bzw. transparenten Bereiche 72 der Deckschicht 62 innerhalb des Ausschnittes 69 können durch eine Schutzhülle 73 verschlossen sein, die bevorzugt aus einem transparenten und verformbaren bzw. flexiblen Material, insbesondere aus Kunststoff, ausgebildet ist. Somit kann auf die im Arbeitsbekleidung 1 innenliegende Fernregler 4 zumindest über Teilbereiche eingesehen werden, wobei der Fernregler 4 gleichzeitig vor äußeren Einflüssen geschützt ist.

Weiters ist es insbesondere im Betätigungsbereich 66 der Einstellorgane 30 möglich, dass die Deckschicht 62 sich unverändert, beispielsweise undurchsichtig, über diesen erstreckt, jedoch Kennzeichnungen 74 im Wesentlichen deckungsgleich zu den an der inneren Oberfläche 59 angeordneten Einstellorgane 30 an der äußeren Oberfläche 68 der Deckschicht 62 angebracht bzw. aufgebracht, beispielsweise aufgedruckt, aufgeklebt, aufgenäht, usw., sind. Diese Kennzeichnungen 74 weisen dabei vorzugsweise eine funktionsbezogene Erscheinungsform, z.B. ein Symbol, ein Kürzel, einen Wortlaut, zu den unter diesen liegenden Einstellorganen 30 auf, sodass eine Bedienperson, beispielsweise mit einem Finger 75, in einfacher Weise das gewünschte Einstellorgan 30 betätigen kann, um daraus die entsprechenden Steuerfunktionen bzw. Befehle für die Schweißanlage 3 zu generieren.

Zu der Bedieneinrichtung 29, umfassend die Einstellorgane 30 und die Ausgabeeinrichtung 31 sei an dieser Stelle angemerkt, dass diese in Art einer einstückigen Ein- und/oder Ausgabeeinheit in Form eines einzigen Elements, insbesondere eines sogenannten Touch-Screen oder einer ähnlichen Vorrichtung, realisiert sein kann.

Die in Fig. 4 dargestellte Energieversorgungseinrichtung 47 ist im gezeigten Ausführungsbeispiel autark in Art einer Batterie 76 ausgebildet, die über Leitungen 77, 78 mit der Leiterplatte 64 verbunden ist, wobei hierzu ein nicht näher dargestelltes Spannungswandlermittel zur Bereitstellung der an der Leiterplatte 64 notwendigen Betriebsspannung in die Leitungen 77, 78 geschaltet sein können oder in der Leiterplatte 64 angeordnet sein können. Die Batterie 76 ist vorzugsweise austauschbar in der Arbeitsbekleidung angeordnet, d.h. aus der Aufnahmeanordnung 56 entfernbar bzw. ersetzbar oder ist dauerhaft und elektrisch aufladbar in der Arbeitsbekleidung 1 integriert. In diesem Zusammenhang ist es zweckmäßig eine Ladestandsanzeige der Energieversorgungseinrichtung 47 im Fernregler 4 vorzusehen, wobei eine derartige Ladestandsanzeige an der Ausgabeeinrichtung 31 realisiert sein kann, sodass eine Person 2 gegebenenfalls über einen notwendigen Wechsel der Batterie 56 durch Ablesen der Ladestandsanzeige Kenntnis erlangen kann.

Die Schnittstelle 32 ist im gezeigten Ausführungsbeispiel ebenfalls in einer eigenen Aufnahmeeinrichtung 56 angeordnet, wobei diese selbstverständlich in der Leiterplatte 64 integriert sein kann, wie vorstehend beschrieben. Das Übertragungselement 40 der Schnittstelle 32 ist als drahtlose Sende- und/oder Empfangseinrichtung bzw. als Transmitter/Receiver, beispielsweise für eine Funk-Übertragung mittels RFID (Radio Frequency Identification) oder HF-Frequenzen, ausgebildet, mit der eine drahtlose uni- oder bidirektionale Kommunikation mit einer Komponente 5, insbesondere Schnittstelle 35, der Schweißanlage 3 durchführbar ist und die mit der Leiterplatte 64 zur elektrischen Signalübertragung verbunden ist.

Dadurch ist es nunmehr möglich, dass der Fernregler 4 einerseits zur Festlegung von spezifischen Parametern bzw. Einstellungen einer Schweißanlage 3 und andererseits zur Überwachung einer oder mehrerer Parameter eines Schweißprozesses ausgebildet sein kann. Die Überwachung eines Schweißprozesses kann dabei durch eine Visualisierung der Schweißanlageneinstellungen am Display 65 der Bedieneinrichtung 29 während eines laufenden Schweißprozesses erfolgen. Beispielsweise ist es möglich, dass eine Person eigenhändig einen manuellen Schweißprozess durchführt, wobei durch Anordnung der Bedieneinrichtung 29 im Bereich einer Hand der jeweiligen Person 2, beispielsweise auf einem Handschuhrücken bzw. einem Unterarmbereich eines Ärmels 54, also im Sichtfeld einer Person 2 im Bereich einer Schweißstelle bzw. des Schweißbrenners 14, die Parameter durch die Person 2 ohne wesentliche Beeinträchtigung des Arbeitsablaufes bzw. der Aufmerksamkeit für den Schweißprozess abgelesen und eingegeben werden können. Daraus ergibt sich der Vorteil, dass auch während eines laufenden, manuellen Handschweißprozesses von der Person 2 auf Prozessschwankungen bzw. Veränderungen durch Störeinflüsse reagiert werden kann und diesen Störeinflüsse durch Nachregelung von Parametern während des Schweißprozess über die Bedieneinrichtung 29 des Fernreglers 4 entgegengetreten werden kann, wobei der Schweißprozess hierzu nicht abgebrochen werden muss, um, wie dies im Stand der Technik der Fall ist, an der Schweißstromquelle 6 bzw. dem Einstellpult 28 die notwendigen Einstellungen zu korrigieren. Erfindungsgemäß kann somit eine Echtzeitprozessüberwachung durch das im Arbeitsbekleidung 1 integrierte Fernregler 4 durchgeführt werden.

Durch eine verteilte Anordnung der einzelnen Module des Fernreglers 4, wie in Fig. 4 durch einzeln angeordnete Energieversorgungseinrichtung 47 und Schnittstelle 32 dargestellt, können einzelne Module des Fernreglers 4 ausgetauscht und an den Anwendungsfall bzw. unterschiedliche Schweißanlagen 3 bzw. Komponenten 5 angepasst werden. Beispielsweise kann die Bedieneinrichtung 29 und/oder das gesamte Übermittlungssystem 42 mit den in diesem angeordneten Modulen lösbar an der Aufnahmeeinrichtung 56 der Arbeitsbekleidung 1 befestigt sein, wie dies in Fig. 6 dargestellt ist. Somit ist es möglich, dass ein Fernregler 4 bzw. einzelne Module desselben verwendet werden können, die speziell für die Kommunikation mit einzelnen Typen von Schweißanlagen 3 bzw. Komponenten 5 ausgebildet sind. Für unterschiedliche Schweißanwendungen kann durch Austausch des Fernreglers 4 oder einzelner Module desselben ein auf die verwendete Schweißanlage abgestimmter Fernregler 4 an der Arbeitsbekleidung 1 aufgebaut bzw. angeordnet werden. Bei derartigen typenspezifischen Fernreglern 4 können die Einstellungsmöglichkeiten, die für jedes Schweißverfahren unterschiedlich sind, speziell an das für den Fernregler 4 vorgesehene Schweißverfahren angepasst sein.

Eine weitere Möglichkeit besteht darin, dass der Fernregler 4 eine automatische Konfiguration der Einstellungsmöglichkeiten bei der Verwendung mit einem speziellen Typ einer Schweißanlage 3 vornimmt, oder diese Konfiguration manuell durch einen Benutzer festlegbar ist. Hierzu können im Fernregler 4 Mittel, beispielsweise eine in der Speichereinrichtung 46 hinterlegte Konfigurationsroutine einer Programmlogik, vorgesehen sein, die z.B. bei in Kraft tretender Kommunikationsverbindung des Fernreglers 4 mit der Komponente 5 eine Konfiguration zur Anpassung der Einstellmöglichkeiten mittels der Bedieneinrichtung 29 des Fernreglers 4 vornehmen. Somit kann der Fernregler 4 zur Kommunikation mit unterschiedlichen Typen von Schweißanlagen 3 ausgebildet sein, wobei nur jene Einstellungen die für das jeweilige Schweißverfahren benötigt werden verfügbar sind. Beispielsweise können in der Speichereinrichtung 46 unterschiedliche Typendefinitionen bzw. Spezifikationen von Schweißanlagen 3 bzw. Komponenten 5 hinterlegt werden, die je nach Typ der mit dem Fernregler 4 in Kommunikationsverbindung stehenden Schweißanlage 3 bzw. Komponente 5 geladen werden.

Weiters ist es möglich, dass der Fernregler 4 nur dann aktiviert wird, wenn dieser oder einzelne Module desselben mit der Energieversorgungseinrichtung 47 oder einer elektrischen Schaltung des Signalübertragungssystems in der Arbeitsbekleidung 1 verbunden wird. Eine Verwendung des Fernreglers 4 ist somit nur in Verbindung mit der Arbeitsbekleidung 1, die das Signalübertragungssystem aufweist, möglich.

In der Ausführungsvariante nach Fig. 6, bei der die Arbeitsbekleidung 1 mit einem von dieser lösbaren und mit dieser verbindbaren Fernregler 4 gezeigt ist, ist der Fernregler 4 mit einer Verbindungseinrichtung 79 ausgestattet, die zur die zur Herstellung einer mechanischen Kopplung mit der Arbeitsbekleidung 1, insbesondere mit Befestigungselementen der Aufnahmeeinrichtung 56, ausgebildet ist. Die Verbindungseinrichtung 79 ist außenseitig am Fernregler 4 angeordnet und wie dargestellt mit Befestigungselementen in Art eines Klettverschlusses versehen, kann jedoch auch in Art einer Klett-, Clips-, Steck-, Schraubverbindung oder einer beliebigen aus dem Stand der Technik bekannten Einrichtung zu mechanischen Kopplung zweier Elemente ausgebildet sein.

Die Energieversorgungseinrichtung 47 ist im gezeigten Ausführungsbeispiel separat zum Fernregler 4 in der Arbeitsbekleidung 1 angeordnet und mit einem Koppelelement 80 am Fernregler 4 über ein weiteres Koppelelement 81 an der Arbeitsbekleidung 1 elektrisch zur Signalübertragung, insbesondere Energieversorgung des Fernreglers 4, verbindbar. Somit ist es möglich, dass der Fernregler 4 bei Verbinden der Verbindungseinrichtung 79 mit der Aufnahmeeinrichtung 56 gleichzeitig über die Koppelelemente 80, 81 mit der Energieversorgungseinrichtung 47 verbunden wird und dieser somit bevorzugt automatisch aktiviert wird. Hierzu ist das Koppelelement 80 der Arbeitsbeldeidung 1 bevorzugt im Nahbereich der einzelnen Befestigungselemente der Aufnahmeeinrichtung 56 angeordnet, sodass durch die übereinstimmende örtliche Positionierung des weiteren, mit dem ersten Koppelelement 80 korrespondierenden Koppelelements 81 des Fernreglers 4 in zuverlässiger Weise eine mechanische Kopplung zur Herstellung einer elektrischen Wirkungsverbindung erfolgen kann. Die Koppelelemente 80, 81 können beispielsweise durch gegenseitig korrespondierende Stecker bzw. Buchsen 81 mit elektrischen Kontakten zur Signalübertragung ausgebildet sein.

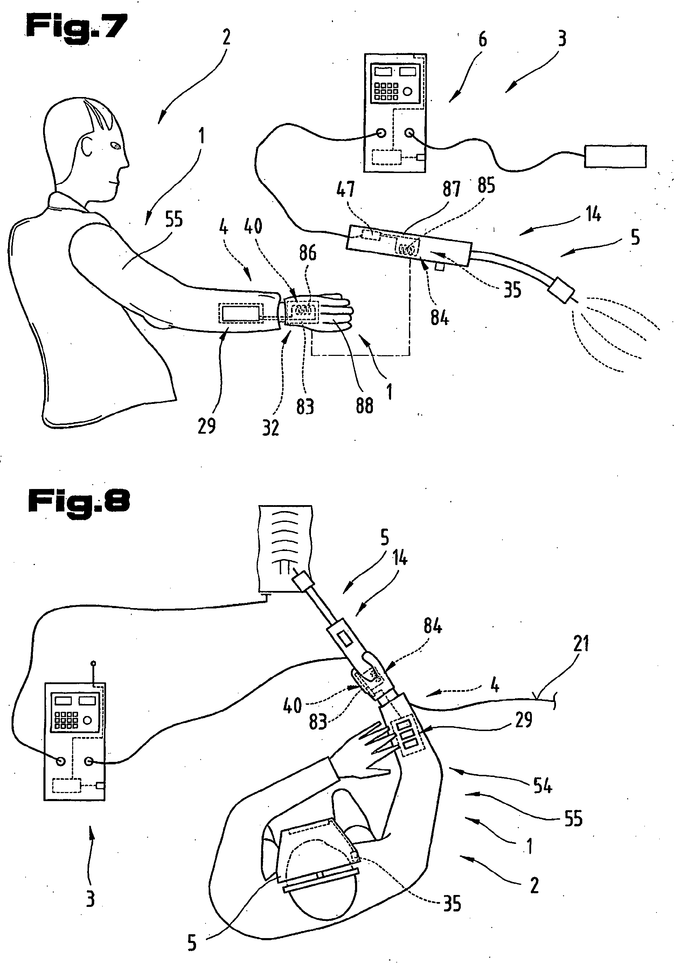

Angemerkt sei eine weitere Möglichkeit, bei der der Fernregler 4 wiederum keine eigene Energiequelle aufweist, sondern dem Fernregler 4 elektrische Energie von einer in der Komponente 5 angeordneten Energieversorgungseinrichtung 47 über die Schnittstelle 32 zugeführt wird, wie dies im Zuge der Fig. 7 beschrieben wird.

Als weiteres mögliches Ausführungsdetail einer Arbeitsbekleidung 1 gemäß Fig. 6 weist diese einen Kennwertgeber 82 auf, der mit dem Femreglers 4 elektrisch koppelbar ist, insbesondere über die Koppelelemente 80, 81. Der Kennwertgeber 82 weist beispielsweise einen Mikrokontroller und eine Speichereinrichtung auf, sodass Daten bzw. Parameter im Kennwertgeber 82 über die Koppelelemente 80, 81 hinterlegbar und abrufbar sind. Neben elektrischer Leistung können somit auch analoge bzw. digitale Informations- bzw. Datensätze uni- oder bidirektional zum Fernregler 4 übertragbar werden. Im Kennwertgeber 82 können hierbei z.B. schweißspezifische Daten von der mit der Schnittstelle 32 des Fernreglers 4 verbundenen Komponente 5, beispielsweise Datum, Arbeitszeiten, Schweißgeräteeinstellungen oder dergleichen hinterlegt werden und ausgelesen werden. Weiters können im Kennwertgeber 82 personenspezifische Daten gespeichert sein, beispielsweise in Form von Benutzerberechtigungen bzw. biometrische Personendaten. Zweckmäßigerweise kann der Kennwertgeber 82 durch einen Transponder 83 realisiert sein, der bevorzugt auf einer flexiblen Folie ausgebildet ist und eine fremdgespeiste Energiezufuhr aufweist, die dies im Stand der Technik bekannt ist.

Die Anordnung eines Transponders 83 in der Arbeitsbekleidung 4 ist vorteilhaft, da in dessen Speicher unterschiedliche Informationen bzw. Parameter hinterlegbar und bedarfsweise abrufbar sind, sodass das Arbeitsbekleidung 1 einen in diesen integrierten, unempfindlichen und zuverlässigen Informationsträger aufweist. Der Transponder 83 weist eine sehr geringe Baugröße und einen flachen und verformbaren bzw. flexiblen Aufbau aufweist. Zum Aufbau des Transponders 83 sei angemerkt, dass dieser aus einer flexiblen Folie mit in dieser integriertem Mikrokontroller, Speichereinrichtung, und Schnittstelle bestehen kann und eine Baugröße und eine Flächenerstreckung von wenigen mm² bis mehreren cm² aufweisen kann.

Weiters ist in Fig. 6 als Gerät 53 ein Mobiltelefon 89 dargestellt, dass über die Kommunikationseinrichtung 48 mit dem Fernregler 4 kommunikationsverbunden ist. Hierzu ist die Kommunikationseinrichtung 48 bevorzugt als standardisierte Schnittstelle, beispielsweise eine Bluetooth, WLAN, Schnittstelle vorgesehen, wodurch mit einer Vielzahl von unterschiedlichen Arten von Geräten 53 ein Signalaustausch ermöglicht wird. Beispielsweise kann das Mobiltelefon 89 in Art eines Modems zur Herstellung einer Kommunikationsverbindung mit dem öffentlichen Kommunikationsnetzwerk 52 bzw. Mobilfunknetzwerkes (siehe Fig. 3) verwendet werden, wodurch von einem mit dem Kommunikationsnetzwerk 52 verbundenen Datenverarbeitungssystem der Status bzw. Prozessverlauf einer Schweißanlage bzw. eines Schweißprozesses und/oder die im Transponder 83 hinterlegten Daten abrufbar sind, wobei es auch möglich ist, dass über die Kommunikationseinrichtung 48 direkt eine Verbindung mit dem Kommunikationsnetzwerk 52 aufgebaut wird.

In Fig. 7 und 8 ist eine weitere Ausführungsvariante dargestellt, bei der eine Übertragung von elektrischer Leistung bzw. Information drahtlos über eine elektrische Kopplung des Fernreglers 4 und der Komponente 5 mittels den Übertragungselementen 40, 84 der Schnittstelle 32 bzw. Schnittstelle 35 erfolgt.

Die Übertragungselemente 40, 84 sind beispielsweise durch ein primärseitiges Erregerelement 85 und ein sekundärseitiges Induktionselement 86 ausgebildet, die gegenseitig magnetisch koppelbar sind. Die Energieversorgungseinrichtung 47 kann hierbei der Komponente 5, beispielsweise dem Schweißbrenner 14, zugeordnet sein und ist mit dem Übertragungselement 84 elektrisch leitend verbunden. Zweckmäßigerweise sind das Erregerelements 85 und das Induktionselement 86 als elektrische Spulen vorgesehen, sodass bei einem Stromfluss im Erregerelement 85 durch dieses ein magnetisches Feld aufgebaut wird, wodurch bei Positionierung des Induktionselement 86 in diesem Erregerfeld eine Spannung im Induktionselement 86 induziert werden kann, wie dies aus dem Stand der Technik bei Transformatorschaltungen bekannt ist. Über die Energieversorgungseinrichtung 47 kann durch Steuerung einer primärseitigen Stellgröße, z.B. einer Frequenz, am Erregerelement 85 die Spannung am Induktionselement 86 festgelegt bzw. geregelt werden. Es sei angemerkt, dass das primärseitige Erregerelement 85 auch dem Fernregler 4 zugeordnet sein kann und das sekundärseitige Induktionselement 86 der Komponente 5 zugeordnet sein kann bzw. eine Umschaltung der Primär- und Sekundärseiten vorgenommen wird, um auch in umgekehrter Richtung eine Signalübertragung zu ermöglichen.

Ein derartiger Aufbau ist vorteilhaft, da bei Ergreifen des Schweißbrenners 14 durch die Person 2 mit dem Handschuh 88 die magnetische Kopplung zwischen den Schnittstellen 32, 35 automatisch in Kraft tritt.

Gemäß dem gezeigten Ausführungsbeispiel nach Fig. 7 und 8 kann sich der Fernregler 4 über mehrere Arbeitsbekleidungen 1 bzw. eigenständige Kleidungsstücke erstrecken, insbesondere dem Handschuh 88 sowie dem Oberhemd 55, die von einem Benutzer 2 getragen werden. Die Signalübertragung zwischen den unterschiedlichen Arbeitsbekleidungs-Stücken 1 kann dabei mittels Leitungen drahtgebunden oder drahtlos erfolgen, wobei hierzu sämtliche bereits in anderem Zusammenhand genannten Übertragungsverfahren verwendbar sind. Weiters ist es möglich, dass dem Fernregler 4 ein aufladbarer Energiespeicher, beispielsweise ein Kondensator oder Akkumulator, zugeordnet ist, der mit dem Übertragungselement 40 verbunden ist. Der Energiespeicher wird zweckmäßigerweise bei bestehender Wirkverbindung zwischen den beiden Übertragungselementen 40, 84 durch die von der Energieversorgungseinrichtung 47 der Komponente 5 bereitgestellten Energie aufgeladen, sodass der Fernregler 4 auch bei getrennter elektrischer Kopplung mit der Schnittstelle 35 der Komponente 5 mit der im Energiespeicher gespeicherten Energie versorgt werden kann.

Es ist nun ein System besonders vorteilhaft, dass sich aus dem Induktionselement 86 des Handschuhs 88 sowie der als Schweißbrenner 14 vorgesehenen Komponente 5 mit dem Erregerelement 85 zusammensetzt, da bei einem manuellen Schweißvorgang durch eine Person 2 der innere Handschuhbereich an einem Griffstück 87 des Schweißbrenners 14 anliegt, wie dies aus der Darstellung in Fig. 8 ersichtlich ist. Ist nun in diesem Bereich des Griffstücks 87 das Erregerelement 85 angeordnet und ist dieses mit der Energieversorgungseinrichtung 47 wirkungsverbunden, kann drahtlos über Induktion, Energie in den Fernregler 4 gespeist werden, wobei über dem Fachmann aus dem Stand der Technik bekannte Kopplungsverfahren auch eine induktive Informationsübertragung, beispielsweise mittels Modulation der übertragenen Spannungen, möglich ist. Die Energieversorgungseinrichtung 47 wird beispielsweise über die im Schweißbrenner 14 befindliche Schweißenergie über die Potentiale der Schweißstromquelle oder separate Energieversorgungsleitungen mit Energie versorgt, sodass zum Betrieb des Fernreglers 4 keinerlei zusätzliche bzw. autarke Spannungsquellen erforderlich sind.

Mit der Schnittstelle 35 der Komponente 5 und/oder der Schnittstelle 32 des Fernregler 4 kann weiters ein Signalverarbeitungsmittel wirkungsverbunden sein, das zur Übertragung bzw. analogen Aufbereitung von Informationen, beispielsweise in Art eines Modulations-/ Demodulationsmittels, ausgebildet ist. Die genaue Funktionsweise einer induktiven Leistungs- bzw. Informationsübertragung über ein Erreger- bzw. Induktionselement 85, 86, die uni- oder bidirektional erfolgen kann, ist dem in diesem Gebiet des Stand der Technik tätigen Fachmann bekannt.

Gemäß den Ausführungsbeispielen nach den Fig. 6 bis 8 ist es somit möglich, dass die von der Komponente 5 einer Schweißanlage 3 an den Fernregler 4 übermittelten Daten im Kennwertgeber 82 und/oder der Speichereinrichtung 46 des Fernreglers 4 hinterlegt werden, wodurch eine Protokollierung ein oder mehrerer festlegbare Kenngrößen erfolgen kann. Beispielsweise ist es auch möglich, dass in als Daten im Kennwertgeber 82 bzw. der Speichereinrichtung 46 des Fernreglers 4 Benutzerberechtigungen hinterlegt bzw. hinterlegbar sind, wobei diese Benutzerberechtigungen die eigentliche Benutzung einer Schweißanlage 3, die Erlaubnis zur Durchführung von unterschiedlichen Schweißprogrammen bzw. Schweißanlageneinstellungen usw. beinhalten kann., sodass z.B. nur freigegebene Einstellungen an der Komponente 5 der Schweißanlage 3 über den Fernregler 4 vorgenommen werden können. Somit ist es möglich, dass mit Arbeitsbekleidungen 1 bzw. Fernreglern 4 die gewissen Personen bzw. Benutzern zugeordnet sind, nur jene Schweißarbeiten durchführbar sind, für die eine Berechtigung vorliegt. In einer möglichen Weiterbildung können im Kennwertgeber 82 bzw. Fernregler 4 biometrische Daten einer Person 2 hinterlegt sein, sodass für eine Person nur Schweißarbeiten durchführbar sind, wenn diese die ihr zugewiesene Schweißbekleidung mit den entsprechend in diesen hinterlegten biometrischen Daten trägt, wobei mit der Fernregler 4 entsprechende biometrische Identifikationsmittel für Personen umfassen kann.

In der Fig. 9 ist eine weitere Ausführungsvariante des Fernreglers 4 dargestellt, wobei als Energieversorgungseinrichtung 47 hierbei ein oder mehrere Energiewandler 90 vorgesehen sind, wobei der Fernregler 4 batterielos ausgebildet ist. Als Energiewandler 90 können beispielsweise thermoelektrische oder elektromechanische Elemente, beispielsweise Peltier-, Piezoelemente, usw., verwendet werden. Wie dargestellt, kann mit zumindest einem der Einstellorgane 30 der Energiewandler 90 wirkungsverbunden sein, wobei dies gemäß Fig. 9 über ein mechanisches Druckelement 91 ausgeführt ist und der Energiewandler 90 durch eine elektromechanisches Wandlerelement, beispielsweise ein Piezo-Element, ausgebildet ist, d.h. eine Materialverformung durch eine wirkende Kraft in elektrische Energie umgewandelt wird. Wird das Einstellorgan 30 betätigt, erfolgt eine mechanische Verformung des elektromechanischen Elements des Energiewandlers 90, wodurch von diesem elektrische Energie erzeugt wird und dem Übertragungssystem 42 bereitgestellt wird. Somit können elektrische Steuerbefehle bei Betätigung der Einstellorgane 30 über die Schnittstelle 32 übersandt werden. Bei einem thermoelektrischen Element, z.B. einem Peltier-Element, als Energiewandler 90 kann die Erzeugung von Energie zum Betrieb des Fernreglers 4 durch die körpereigene Abwärme der Person 2, die das Arbeitsbekleidung 1 trägt, erfolgen, wodurch eine konstante Energieerzeugung möglich ist. Weitere Beispiele für Integrationsmöglichkeiten des Fernreglers 4 in ein Arbeitsbekleidung 1 sind durch eine Brille 92, sowie einen Schuh 93 dargestellt.

Die unterschiedlichen Komponenten 5 der Schweißanlage 3, beispielsweise Schweißstrom quelle 6, Schweißbrenner 14, Ein- und/oder Ausgabeeinrichtung 26, usw., können Gegenstand einer eigenständigen, erfindungsgemäßen Lösung sein. Dazu sind die Komponenten 5 mit der Schnittstelle 35 ausgestattet, die zur Herstellung einer elektrischen Wirkungsverbindung, insbesondere Signal- bzw. Datenübertragung bzw. Leistungsübertragung, mit der Schnittstelle 32 des Fernreglers 4 des Arbeitsbekleidung 1 ausgebildet ist.

Eine eigenständige Lösung betrifft auch ein System zur Steuerung und/oder Regelung von Schweißanlagen 3, wobei das System die Arbeitsbeldeidung 1, dem der Fernregler 4 zugeordnet ist, und zumindest eine der Komponenten 5 der Schweißanlage 3 umfasst. Der Fernregler 4 weist hierzu die Schnittstelle 32 auf und die Komponente 5 weist zur Herstellung einer elektrischen Wirkungsverbindung mit dem Fernregler 4 die Schnittstelle 35 auf. Somit können zwischen den Schnittstellen 32, 35 des Systems elektrische Signale, insbesondere eine Leistung und/oder Informations- bzw. Datensätze, übertragen werden.

Selbstverständlich ist es möglich, dass der Fernregler 4 nicht nur an einer Stelle der Arbeitsbekleidung 1 angeordnet ist, sondern dass mehrere Fernregler 4, insbesondere für unterschiedliche Typen von Schweißanlagen 3, an unterschiedlichen Stellen bzw. Bereichen der Arbeitsbekleidung 1 angeordnet sind.

Die Ausführungsbeispiele zeigen mögliche Ausführungsvarianten der Arbeitsbekleidung 1, des Fernreglers 4, der Komponenten 5, sowie eines Systems zur Steuerung und/oder Regelung von Schweißanlagen 3, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

In der Fig. 9 ist eine eigenständige Lösung für eine Arbeitsbekleidung 1 dargestellt. Es ist diese Arbeitsbekleidung 1 für Schweißarbeiten geeignet, bei denen der Schweißprozess mittel elektrischer Energie durchgeführt wird, d.h. bei denen über die elektrischen Schweißleitungen 21, 22 zur Zündung eines Lichtbogens 19 ein Schweißstrom und eine Schweißspannung fließen. Dies ist bei elektrischen Widerstands- Schweißverfahren, wie z.B. Stabelektroden-, MIG/MAG-, oder WIG- Schweißen der Fall.

Wie als allgemeine, physikalische Gesetzmäßigkeit bekannt, geht von Strom bzw. Spannung führenden Leitern ein elektrisches und magnetisches Feld aus, wobei als maßgebende Größe für das elektrische Feld die Spannung und als maßgebende Größe für das magnetische Feld die Stromstärke im Leiter zu sehen ist. Bei von Schweißanlagen 3 durchgeführten Schweißprozessen treten vor allem niederfrequente elektrische und magnetische Felder um die stromführenden Leitungen auf, die entsprechend der Frequenz des Schweißstromes in einem Frequenzbereich von 0 bis 30 kHz liegen, wobei auch hochfrequente, elektromagnetische Wellen im Bereich von 30 kHz bis ca. 1 MHz ausgesendet werden können. Im niederfrequenten Bereich ist für die Person 2 im Bereich der Schweißanlage 3 das zeitlich veränderliche, magnetische Feld für die Wirkung auf den Körper maßgeblich, da dieses mit aus dem Stand der Technik bekannten Bekleidungsmaterialien auf dem Gebiet der Arbeitsbekleidungen nicht abgeschirmt werden kann.

Mit der erfindungsgemäßen Arbeitsbekleidung 1 für Schweißarbeiten kann eine Wirkung der elektrischen und insbesondere der magnetischen Felder auf den menschlichen Körper verringert oder verhindert werden.

Hierzu weist die Arbeitsbekleidung 1 ein oder mehrere Schutzzonen 127 auf, in denen eine Schutzeinrichtung 128 angeordnet bzw. wirksam ist, mit der eine Abschirmung oder Verringerung von durch eine stromführende Komponente 5 der Schweißanlage 3, beispielsweise den Schweißleitungen 21, 22 ausgesendeter, elektrischer und/oder magnetischer Felder in den insbesondere hinter den Schutzzonen 127 liegenden Bereichen bzw. einem Innenraum 129 der Arbeitsbekleidung 1 erfolgt. Durch die angeordnete Schutzeinrichtung 128 ist die Abschirmung des von der Arbeitsbekleidung 1 umgebenen Innenraums 129, in dem sich die entsprechenden Teile des Körpers der Person 2 befinden, gegen magnetische und/oder elektrische Gleich- oder Wechselfelder möglich.

In Fig. 9 ist als Beispiel für eine Arbeitsbekleidung 1 ein Schweißoverall 130 dargestellt, der ein- oder mehrteilig ausgebildet sein kann und der - vereinfacht durch strichlierte Linien dargestellt - die Schutzzonen 127 in einem Rumpfbereich 131, einem Ärmelbereich 132 sowie einem Hüft- bzw. Lendenbereich 133 aufweist. Die Bereich 131 bis 133 stellen für eine Person 2 bei vielen Schweißpositionen durch direkte Nähe zu den stromführenden Schweißleitungen 21, 22 die vom durch die elektrische Schweißenergie erzeugten Magnetfeld am stärksten beeinflussten Körperteile dar, die wenigstens zur Abschwächung der Feldstärke des auf die Person 2 einwirkenden Feldes durch die Schutzeinrichtungen 128 abgeschirmt bzw. geschützt werden. Selbstverständlich ist es auch möglich, dass über die gesamte Erstreckung oder beliebige andere Bereiche der Arbeitsbekleidung 1 die Schutzzone 127 mit der in dieser angeordneten bzw. wirksamen Schutzeinrichtung 128 verläuft. Beispielsweise können die Schutzzonen 127 auch in den die Wirbelsäule bzw. den Rücken, den Kopf oder die Hand abdeckenden Bereichen der Arbeitsbekleidung 1 liegen, wobei die Schutzzone 127 insbesondere im Bereich des menschlichen Zentralnervensystems verlaufen kann.

Die Schutzeinrichtung 128 kann durch ein zumindest elektrische und/oder magnetische Strahlung isolierendes bzw. ableitendes, passiv wirksames Schirmungselement 134 gebildet sein, wie dies aus den Fig. 9 bis 11 ersichtlich ist. Das Schirmungselement 134 ist durch einen Werkstoff gebildet, der eine Abschirmung von niederfrequenten elektrischen und/oder magnetischen Feldern und/oder hochfrequenten elektromagnetischen Wellen - im Nachfolgenden der Einfachheit halber gegebenenfalls als "Felder" bezeichnet - bewirkt, sodass der Innenraum 129 der Arbeitsbekleidung 1 vor Feldern geschützt ist.

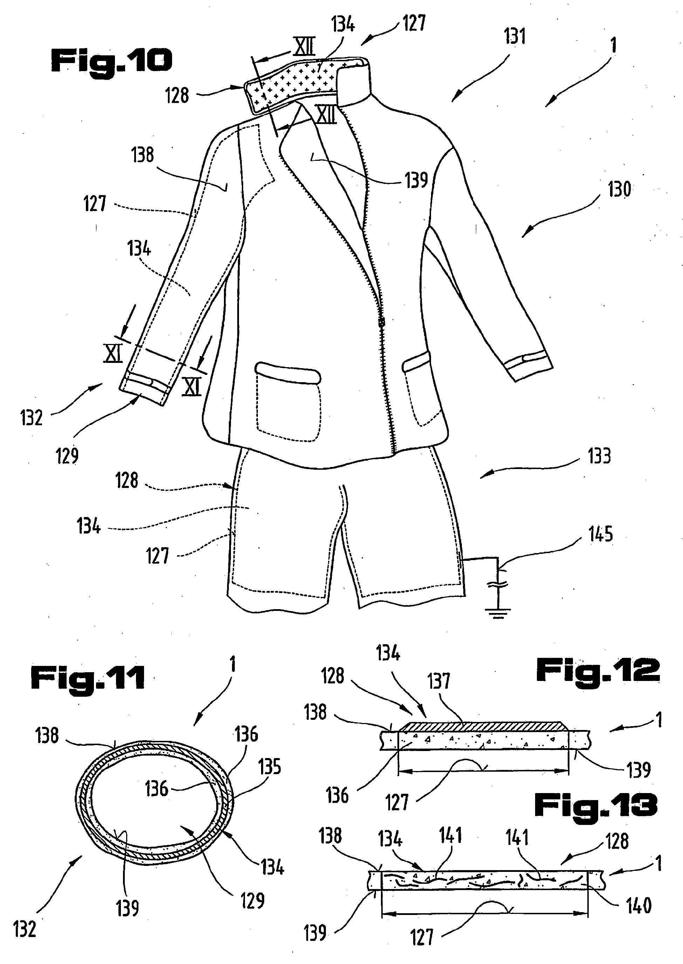

Wie aus den Fig. 10 und 11 ersichtlich, kann das Schirmungselement 134 durch eine flächige Schirmungslage 135 gebildet sein, die in der Schutzzone 127 angeordnet ist. Es ist dabei eine platten-, streifen- oder folienartige Ausbildung der Schirmungslage 135 möglich. Die Schirmungslage 135 kann im Verbund mit weiterem Bekleidungsmaterial 136 der Arbeitsbekleidung 1, beispielsweise Textilgewebe bzw. Futter, die Schutzzone 127 ausbilden, oder es bildet die Schirmungslage 135 alleine die Arbeitsbekleidung 1 im Bereich der Schutzzone 127 aus.

In Fig. 10 ist eine röhrenartige, den Innenraum 129 vollumfänglich umschließende Schirmungslage 135 gezeigt, die gegebenenfalls durch mehrere Schalenteile gebildet sein kann. Mit einer derartigen, eine den Innenraum 129 umschließenden Ausgestaltung der Schirmungslage 135 kann zusätzlich eine Wirkung nach dem Prinzip eines Faraday- Käfigs erzielt werden, sodass der Innenraum 129 zumindest vor hochfrequenter, elektromagnetischer Strahlung abgeschirmt wird. Die Schirmungslage 135 kann den Innenraum 129 in bevorzugten Ausgestaltungen im Rumpfbereich 131 bzw. Brust- und Bauchbereich oder im Hüft- bzw. Lendenbereich 132 in einer horizontal verlaufenden Erstreckungsebene umschließen. Die Schirmungslage 135 ist dabei vorzugsweise an die Anatomie der Person 2 im Bereich der Schutzzone 127 angepasst.

Entlang deren Haupterstreckungsebene kann die Schirmungslage 135 in sich geschlossen bzw. aus vollem Material, oder strukturiert, beispielsweise gitter- oder lochplattenartig, ausgebildet sein und hierzu ein oder mehrere Öffnungen bzw. Ausnehmungen aufweisen. Durch die entweder geschlossenen oder geöffneten Schirmungslagen 135 können die störenden Felder in Abhängigkeit deren Eigenschaften, insbesondere der Frequenz, abgeschwächt bzw. abgeleitet werden. Eine als geschlossener Vollkörper ausgebildete Schirmungslage 135 ist insbesondere zur Abschirmung niederfrequenter, magnetischer Felder geeignet, wobei die Schirmungslage 135 hierzu bevorzugt aus magnetisch leitfähigem bzw. hochpermeablem Material gebildet ist. Eine strukturierte Schirmungslage 135, insbesondere eine Loch- bzw. Gitterplatte, ist dabei durch das Wirkprinzip eines Faraday- Käfigs insbesondere zur Abschirmung hochfrequenter bzw. elektrischer Felder geeignet, wobei die strukturierte Schirmungslage 135 ebenfalls aus magnetisch leitfähigem bzw. hochpermeablem Material gebildet sein kann.

Die Schirmungslage 135 ist beispielsgemäß in Art einer Ein- bzw. Zwischenlage in der Schutzzone 127 angeordnet und vollständig vom Bekleidungsmaterial 136 umgeben oder in diesem eingebettet. Hierbei kann die Schirmungslage 135 im Bekleidungsmaterial 136 dauerhaft eingenäht sein oder in einer zugänglichen Haltetasche der Arbeitsbekleidung 1 angeordnet sein und über eine beispielsweise schlitzartige Zugangsöffnung entnehmbar sein.

Eine weitere Möglichkeit einer Ausgestaltung des Schirmungselements 134 besteht darin, das dieses auf das Bekleidungsmaterial 136 der Arbeitsbekleidung 1 in der Schutzzone 127 als Beschichtung 137 aufgetragen ist, wie dies in der Fig. 12 dargestellt ist. Die Beschichtung 137 kann dabei entweder an einer Außenoberfläche 138 oder einer Innenoberfläche 139 der Arbeitsbekleidung 1 bzw. des Kleidungsstückes aufgetragen sein. Durch das als Beschichtung 137 ausgebildete Schirmungselement 134 wird die Herstellung der Arbeitsbekleidung 1 im Bereich der Schutzzone 127 erleichtert, da das Schirmungselement 134 nicht in das Bekleidungsmaterial 136 eingebettet werden muss, sondern über ein Beschichtungsverfahren außen- und innenseitig aus dem Stand der Technik bekannte Ausgestaltungen bzw. Materialien 136 aufgebracht wird. Eine Befestigung des Schirmungselements 134 an der Außenoberfläche 138 oder Innenoberfläche 139 der Arbeitsbekleidung 1 kann auch durch eine Klebeoder Kunststoffschweißverbindung erfolgen.

Eine weitere Möglichkeit einer Ausgestaltung des Schirmungselements 134 ist in der Fig. 13 dargestellt, wobei das Schirmungselement 134 durch ein Geflecht bzw. Gewebe 140 ausgebildet ist, das zumindest teilweise elektrisch und/oder magnetisch abschirmende Eigenschaften aufweisende Fasern 141 umfasst. Das Geflecht bzw. Gewebe 140 ist dabei bevorzugt flexibel bzw. anpassungsfähig ausgebildet, sodass für die Person 2 der Tragekomfort von am Körper anliegenden, textilen Arbeitsbekleidungen nicht bzw. nur unwesentlich eingeschränkt wird.

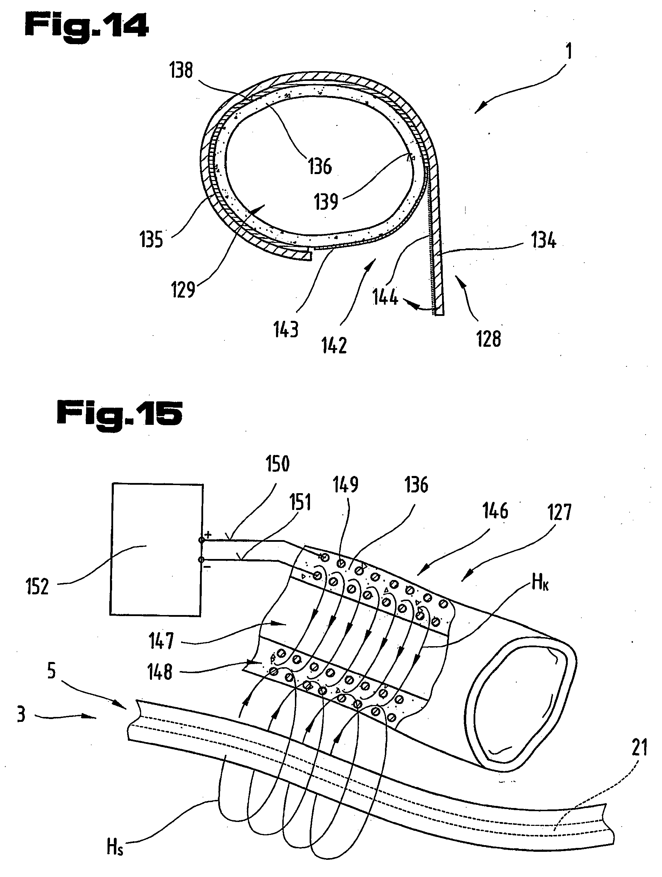

Eine weitere Ausgestaltung einer Arbeitsbekleidung 1 ist in Fig. 14 dargestellt, wobei eine Befestigungseinrichtung 142, insbesondere eine Klett-Verbindung, an der Außenoberfläche 138 angeordnet ist, über die das Schirmungselement 134 an der Außenoberfläche 138 lösbar oder unlösbar befestigbar ist. Die Befestigungseinrichtung 142 kann selbstverständlich auch an der Innenoberfläche 139 in der Arbeitsbekleidung 1 vorgesehen sein, sodass das Schirmungselement 134 innenseitig befestigbar ist. Das Schirmungselement 134 ist dabei als tuch- oder lappenartiges Deckelement gebildet, die gegebenenfalls als eigenständiger und vollständig von der Schutzzone 127 lösbarer Bauteil gebildet ist. Die Befestigungseinrichtung 142 kann aus einzelnen, der Außen- oder Innenoberfläche 138, 139 zugeordneten Verbindungselementen 143 und weiteren, dem Schirmungselement 134 zugeordneten Verbindungselementen 144 bestehen, wobei die Verbindungselemente 143, 144 zur Herstellung einer mechanischen Kopplung ausgebildet sind. Beispielsweise sind die Verbindungselemente 143, 144 darstellungsgemäß durch einen Klettverschluss oder Klipps- oder Steckelemente oder dgl. gebildet.

Im Allgemeinen sei zum Schirmungselement 134 angemerkt, dass diese, insbesondere die Schirmungslage 135 oder die abschirmenden Fasern 141 des Gewebes 140, zumindest teilweise aus einem Werkstoff gebildet ist, welcher magnetische oder/oder elektrische Felder abschirmende bzw. ableitende Eigenschaften aufweist. Zur Abschirmung von magnetischen Feldern ist der Werkstoff bevorzugt aus der Gruppe der ferromagnetischen Materialien ausgewählt und es weist dieser eine hohe Permeabilität, insbesondere größer als 1, und bevorzugt weichmagnetische Eigenschaften auf. Derartige Materialien sind aus dem Stand der Technik bekannt, wobei beispielsweise weichmagnetische Eisen-Nickel-Legierungen, beispielsweise eine 80%ige Eisen-Nickel-Legierung, das sogenannte MU-Metall, als Werkstoff für das Schirmungselement 134 verwendet werden kann. Als weitere Werkstoffe für das Schirmungselement 134 können zur Schirmung elektrischer Felder nicht-magnetische Materialien z.B. Kupfer, Aluminium oder dergleichen verwendet werden, wobei eine mögliche Ausgestaltung angemerkt sei, bei der in einem Schirmungselement 134 mehrere Schirmungslagen 135 vorgesehen sind, die jeweils aus unterschiedlichen Werkstoffen, beispielsweise ferromagnetischen und nicht-ferromagnetischen Werkstoffen, ausgebildet sind.

Weiters besteht die Möglichkeit, dass in der Schutzzone 127 das Schirmungselement 134 von feuerfestem bzw. hitze- oder UV-beständigem Bekleidungsmaterial 136 umschlossen bzw. in diesem eingearbeitet ist. Somit kann die Erwärmung des Schirmungselements 134, welches gegebenenfalls aus ferromagnetischem Material gebildet ist, über die Curie- Temperatur von ca. 768°C bei Eisen sowie bei ca. 158°C bei Nickel verhindert werden, sodass die ferromagnetischen Eigenschaften im Werkstoff nicht verloren gehen.

Das Schirmungselement 134 kann weiters mit einer Erdungsleitung 145, beispielsweise über einen steckbaren Anschluss oder dgl., verbunden sein, sodass eine Ableitung der im Schirmungselement 134 gegebenenfalls vorherrschenden Elektrizität erfolgen kann. Hierzu sei angemerkt, dass unterschiedliche Schirmungselemente 134 untereinander leitend verbunden sein können und gegebenenfalls zumindest eines der Schirmungselemente 134 an die Erdungsleitung 145 angeschlossen ist.

Eine weitere Ausgestaltungsmöglichkeit der Schutzeinrichtung 128 besteht darin, dass diese zur aktiven Kompensation von Feldern, insbesondere Magnetfeldern, bzw. Strahlung einen Kompensator 146 aufweist, wie in Fig. 15 dargestellt.

Der Kompensator 146 ist zur Auslöschung oder Verringerung vorzugsweise magnetischer Felder (H_{S}) der Schweißanlage 3 durch Absonderung von zu diesen entgegengesetzt gerichteten Kompensations- Feldern (H_{K}) ausgebildet. Wie physikalisch bekannt, kann insbesondere die vektorielle Größe der magnetischen Feldstärke an einem beliebigen Punkt im Raum kann durch eine genau entgegengerichtet wirkende Feldstärke verringert oder bei exakt gleichem Betrag der Feldstärke ausgelöscht werden, wobei dieses Prinzip mittels aktiver Erzeugung von magnetischen Gegenfeldern durch den Kompensator 146 ausgenutzt wird.

Der Kompensator 146 weist hierzu einen Felderzeuger 147 auf, der zur Erzeugung von elektrischen und/oder magnetischen Gegenfeldern ausgebildet ist, wodurch die von Komponenten 5 der Schweißanlage 3 erzeugten Felder zumindest teilweise aufgehoben bzw. kompensiert werden. Der Felderzeuger 147 kann z.B. als mit einer Stromquelle bzw. einer elektrischen Versorgungsquelle verbundener elektrischer Leiter 148 gebildet sein.

Beispielsweise ist in Fig. 15 der elektrische Leiter 148 als Ringspule 149 ausgebildet, die im Bekleidungsmaterial 136 der Arbeitsbekleidung 1 in der Schutzzone 127 angeordnet ist. Der Leiter 148 ist über Leitungen 150, 151 an eine eigene Stromquelle 152 oder die Stromquelle 6 der Schweißanlage 3 angeschlossen. Die dargestellten Feldlinien H_{K} des erzeugten Magnetfelds des Leiters 148 sind dabei den Feldlinien des Magnetfelds H_{S} der Schweißanlage 3 entgegengerichtet, sodass eine Schwächung oder Auslöschung des durch die Schweißanlage 3 erzeugten Magnetfelds H_{S} in der Schutzzone 127 der Arbeitsbekleidung 1 erfolgt. Der elektrischer Leiter 148, der mit der Stromquelle 152 verbunden ist, wird von einem Kompensationsstrom durchflossen, der bevorzugt eine gleiche Frequenz zum Schweißstrom aufweist, jedoch in die entgegengesetzte Richtung fließt bzw. eine um 180 ∘ phasenverschobene Periode zum Schweißstrom aufweist. Somit ist stets ein gegengerichtetes, vom Felderzeuger 147 erzeugter Gegenfeld zum Feld der Schweißanlage 3 wirksam. Die Stromquelle 6; 152 ist zur diesem Zweck vorzugsweise zur Erzeugung eines in dessen Eigenschaften steuer- bzw. regelbaren Kompensationsstromes ausgebildet.

Eine weitere eigenständige, erfindungsgemäße Lösung betrifft eine in Fig. 14 dargestellte Schweißanlage 3, insbesondere Schweißgerät, oder eine Arbeitsbekleidung 1 für über die Schweißanlage 3 durchführbare Schweißarbeiten, wobei diese Arbeitsbekleidung 1 eine Analyseeinrichtung 227 aufweist, die zur Erkennung und/oder Bewertung ein oder mehrerer Parameter bzw. Zustandsgrößen der Umgebungsbedingungen im Bereich der Schweißanlage 3 ausgebildet ist.

Die Umgebungsparameter sind messbare Zustandsgrößen bzw. Faktoren der freien Umgebung bzw. Umwelt, insbesondere im Bereich der Schweißanlage 3 oder im Innenraum der Arbeitsbekleidung 1. Umgebungsparameter können beispielsweise eine Gaszusammensetzung bzw. Luftzusammensetzung, eine Temperatur, ein Schallpegel, ein Feuchtigkeitsgrad, eine elektromagnetische Strahlung bzw. magnetisches und elektrisches Feld, Schwebepartikel usw. sein. Mittels der Analyseeinrichtung 227 ist es möglich, eine Erkennung ein oder mehrerer der Umgebungsparameter, eine Auswertung der Umgebungsparameter hinsichtlich der Überschreitung eines Grenzwertes oder hinsichtlich einer unzulässigen Zusammensetzung bzw. Konzentration, insbesondere einer Gaszusammensetzung, und eine Ausgabe eines Steuersignals in Abhängigkeit von Ist-Werten der Umgebungsparameter durchzuführen.

Es weist die Analyseeinrichtung 227 zumindest einen Sensor 228 auf, der zur Erfassung ein oder mehrerer der Umgebungsparameter in einem Erfassungsbereich 229 im Raum der Schweißanlage 3 ausgebildet ist.

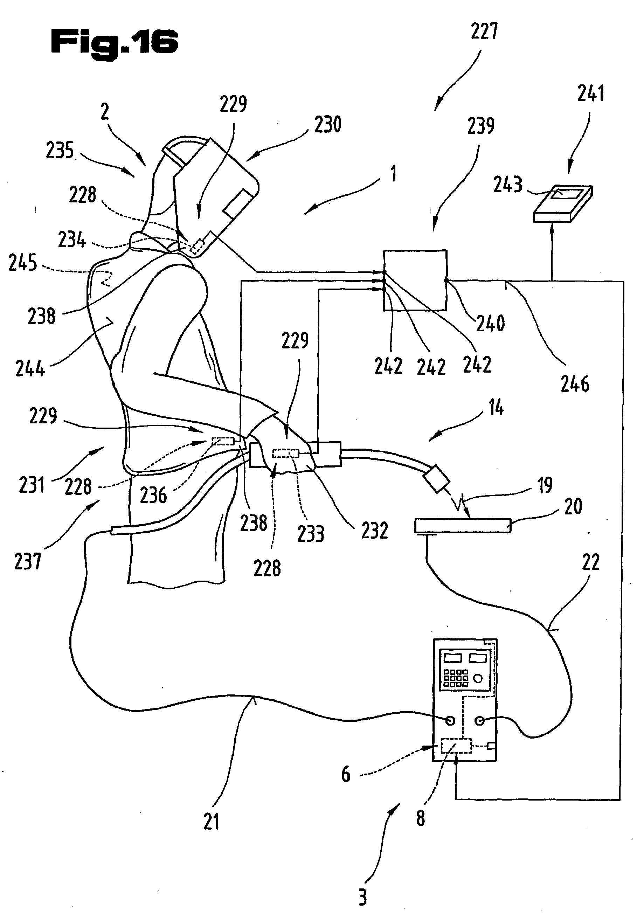

In der Fig. 16 ist eine die Schweißanlage 3 bedienende Person 2 dargestellt, die als Arbeitsbekleidung 1 einen Schutzschirm 230 zum Schutz des Gesichtsfeldes sowie einen gegebenenfalls mehrteiligen, den Rumpf und die Gliedmaßen der Person 2 bedeckenden Schweißoverall 231 trägt.

Grundsätzlich ist eine Anordnung des Sensors 228 im Bereich des Zentralnervensystems, beispielsweise Kopf, Wirbelsäule oder Rumpf, einer Person 2 zweckmäßig, da in diesem Bereich vom Schweißbrenner 14 bzw. den elektrischen Schweißleitungen 21, 22 ausgehende elektrische und magnetische Felder einen kritischen bzw. starken Einfluss auf den Körper der Person 2 haben. Im dargestellten Ausführungsbeispiel ist im Bereich einer Hand 232 bzw. Unterarms der Person 2 ein als Feldsensor 233 ausgebildeter Sensor 228 angeordnet, der zur Erfassung von Feldgrößen eines elektrischen und/oder magnetischen Gleich- oder Wechselfeldes ausgebildet ist.

Wie allgemein bekannt, erzeugen Ladungsträger ein diese umgebendes magnetisches bzw. elektrisches Feld, d.h. es werden die Schweißleitungen 21, 22, die eng an der Person 2 verlaufen, durch ein magnetisches Feld mit einer zum Schweißstrom proportionalen Feldstärke umgeben, wobei dieses ein Gleich- oder Wechselfeld im niederfrequenten Bereich von 0 bis 30 kHz oder ein hochfrequentes Feld von 30 kHz bis mehreren MHz wirken kann. Mittels dem Feldsensor 232 ist nun eine Erfassung ein oder mehrerer der Feldgrößen möglich, sodass in weiterer Folge eine Auswertung der Istwerte hinsichtlich der Überschreitung von Soll- bzw. Grenzwerten erfolgen kann, wie dies an späterer Stelle näher beschrieben wird.

Der Feldsensor 232 kann durch aus dem Stand der Technik bekannte Erfassungsvorrichtungen, wie z.B. ein Hallelement, ein Feldplattenelement, eine elektrische oder magnetische Feldsonde, einen induktiven Aufnehmer, insbesondere eine Leiterschleife oder Spule, einen kapazitiven Aufnehmer oder dgl. gebildet sein.

In der beispielhaften Darstellung einer Arbeitsbekleidung, gemäß Fig. 16, ist weiters ein Gassensor 234 dargestellt, der zweckmäßigerweise im Bereich der Atemwege der Person 2 am Schutzschirm 230 angeordnet ist. Mittels dem Gassensor 234 können bei einem Schweißprozess eingebrachte oder entstehende Dämpfe bzw. Verbrennungsgase, wie beispielsweise Kohlendioxide oder Kohlenmonoxide, Stickstoffe, oder dgl., erfasst werden. Insbesondere ist die Erfassung von gesundheitsgefährdenden Gasen bzw. Gaskonzentrationen im Bereich der Schweißanlage 3 möglich.

Gemäß Fig. 16 ist weiters ein Temperatursensor 236 im Hüft- bzw. Lendenbereich 237 der Person angeordnet, sodass die aufgrund des thermischen Schweißprozesses entstehende Temperaturerhöhung gegenüber der Raumtemperatur erfasst werden kann. Eine Anordnung im Hüft- bzw. Lendenbereich 237 ist aufgrund der räumlichen Nähe zur Schweißstelle und der besonderen Empfindlichkeit dieses Bereiches gegenüber Wärmestrahlung zweckmäßig.

Weiters kann der Sensor 228 durch einen nicht näher dargestellten Akustiksensor zur Erkennung von bei einem Schweißprozess entstehenden Schallemissionen ausgebildet sein, wobei der Schall bei einem Schweißprozess beispielsweise durch die Impulslichtbogenzündung oder die Gasverbrennung entsteht. Weiters kann der Sensor 228 durch einen Partikelsensor gebildet sein, der beispielsweise optisch oder elektrisch eine Erfassung derart bzw. Dichte von im Raum der Schweißanlage 3 befindlichen Schwebepartikel, beispielsweise Rußpartikel oder Schmutzpartikel, vornimmt. Der Sensor 228 kann weiters durch einen Feuchtigkeitssensor gebildet sein, der zur Erfassung von innerhalb des Erfassungsbereichs 229 befindlichen, elektrisch leitfähigen Flüssigkeiten ausgebildet ist. Eine Gefährdung der Person 2 durch einen ungewollte Ableitung von Strom über deren Körper, d.h. Stromschlag, kann durch die Erkennung von unbeabsichtigt elektrisch leitenden Bereichen verhindert werden.

Zu der Anordnung der Sensoren 228 an gewissen Bereichen der Arbeitsbekleidung 1 sei angemerkt, dass die Sensoren 228 nicht auf den dargestellten Erfassungsbereich 229 beschränkt sind, sondern an beliebiger Stelle in oder an der Arbeitsbekleidung 1 angeordnet bzw. wirksam sein können, wobei auch mehrere Sensoren des selben oder unterschiedlichen Typs in der Arbeitsbekleidung 1 bzw. einem Kleidungsstück angeordnet sein können. Der Aufbau und die Funktionsweise der Sensoren 228 sind dem Fachmann auf diesem Gebiet aus dem Stand der Technik bekannt, weshalb an dieser Stelle nicht näher darauf eingegangen wird.

Es weist die Analyseeinrichtung 227 zumindest eine Auswerteeinrichtung 239 auf, die in Abhängigkeit des Ist-Werts ein oder mehrerer durch den zumindest einen Sensor 228 erfassten Umgebungsparameter ein Steuersignal generiert. Bevorzugt wird an einem Ausgang 240 der Auswerteeinrichtung 239 das Steuersignal abgegeben, wobei mit dem Ausgang 240 der Auswerteeinrichtung 239 eine Ausgabeeinrichtung 241 oder eine der Komponenten 5 der Schweißanlage 3, insbesondere der Steuereinrichtung 8, verbunden ist.

Die Auswerteeinrichtung 239 weist ein oder mehrere Eingänge 242 auf, mit denen die Sensoren 228 zur elektrischen Signalübertagung über Leitungen zur Signalübertragung wirkungsverbunden sind, sodass die für den Ist-Wert der Umgebungsparameter repräsentativen Signale der Sensoren 228 von der Auswerteeinrichtung 239 verarbeitet werden können. Die Auswerteeinrichtung 239 ist zur Berechnung bzw. Ermittlung eines ausgangsseitigen Steuersignals bzw. einer Stellgröße zur Steuer- bzw. Regelung von an den Ausgang 240 angebundenen Komponenten ausgebildet, wobei die Generierung des Steuersignals in Abhängigkeit des Ist-Wertes und eines Soll- bzw. Grenzwertes erfolgt. Mittels einem von der Auswerteeinrichtung 239 durchgeführten Auswerteverfahren ist dabei eine Abweichung vom Sollwert bzw. die Art oder die Größenordnung der Abweichung feststellbar, wobei das Auswerteverfahren in der Auswerteeinrichtung 239 mittels einer Logikschaltung bzw. einer Programmlogik realisiert sein kann. Die Soll- bzw. Grenzwerte der Auswerteeinrichtung 239 können gegebenenfalls frei definierbar sein, insbesondere über eine mit der Auswerteeinrichtung 239 verbundene Eingabeeinrichtung für Benutzereingaben oder eine Steuereinrichtung.

Es kann die Auswerteeinrichtung 239 ein Zeitglied aufweisen, das zur Ermittlung einer Zeitspanne, in der ein Ist-Wert für einen Umgebungsparameter einen gewissen Soll- oder Grenzwert übersteigt, ausgebildet ist. Eine zulässige oder unzulässige Einwirkungsdauer von Umgebungsparametem kann über das Zeitglied ermittelt werden.

Die Ausgabeeinrichtung 241 der Analyseeinrichtung 227 ist beispielsweise durch einen optischen; akustischen Signalgeber oder einem Bewegungssignalgeber ausgebildet, der in Abhängigkeit des von der Auswerteeinrichtung 239 generierten Steuersignals aktiviert wird, wobei die Ausgabeeinrichtung 241 hierzu beispielsweise eine Anzeige 243 bzw. ein Display aufweist, dass zur Visualisierung der aktuellen Zustandwerte der Umgebungsparameter im Bereich der Schweißanlage 3 in Form von grafischen Darstellungen, insbesondere Diagrammen oder dgl., oder durch Zifferndarstellungen ausgebildet ist.

Die Ausgabeeinrichtung 241 kann jedoch auch nur zur Ausgabe eines Zustandssignals für einen entweder zulässigen oder nicht zulässigen Zustand der Umgebungsbedingungen ausgebildet sein. Hierzu können die Ausgabeeinrichtung 241 und der Sensor 228 als gemeinsame, funktionelle Einheit beispielsweise derartig ausgebildet sein, dass diese durch einen sich in Abhängigkeit der Eigenschaften der Umgebungsparameter verfärbenden Bereich an einer Außenseite 244 oder Innenseite 245 am Bekleidungsmaterial 238 realisiert sind. Es ist auch möglich, dass die Auswerteeinrichtung 239 mit der Ausgabeeinrichtung 241 und gegebenenfalls mit der Eingabeeinrichtung zur Eingabe von benutzerdefinierten Einstellungen in einer gemeinsamen Baueinheit integriert ist.

Die Sensoren 228 sind vorzugsweise im Bekleidungsmaterial 238 der Arbeitsbekleidung 1 eingebettet bzw. integriert, insbesondere zwischen zwei textilen Lagen angeordnet, oder an der Außenseite bzw. Außenoberfläche 244 oder Innenseite bzw. Innenoberfläche 245 der Arbeitsbekleidung 1 angeordnet.

Der Ausgang 240 der Auswerteeinrichtung 239 kann weiters mit einer Komponente 5 der Schweißanlage 3 wirkungsverbunden sein, sodass beispielsweise auf den Schweißprozess in Abhängigkeit der durch die Sensoren 228 erfassten Istwerte durch Ansteuerung der Stromquelle über eine Steuerleitung 246 Einfluss genommen werden kann. Insbesondere ist eine Änderung ein oder mehrerer Schweißgrößen, wie beispielsweise der Gaszufuhr, der elektrischen Schweißleistung, usw., möglich, um die äußeren Umgebungsparameter im Raum durch entsprechende Regelung bzw. Steuerung der Schweißanlage 3 indirekt zu verändern. Beispielsweise kann durch Verminderung oder Erhöhung der Gaszufuhr oder der Schweißleistung für den Schweißprozess der erzeugte Anteil von Schwebepartikel, insbesondere Rußpartikel, die Höhe der Schweißtemperatur, die entstehenden Schweißdämpfe bzw. Gase, verändert, insbesondere reduziert, werden.

Eine weitere Möglichkeit besteht darin, dass die Auswerteeinrichtung 239 mit der Ein- und/ oder Ausgabeeinrichtung 26 der Schweißanlage 3 verbunden ist, sodass in der Ein- und/oder Ausgabeeinrichtung 26 eine für die Person 2 eindeutig wahrnehmbare Ausgabe, insbesondere Visualisierung oder akustische Signalgebung, der aktuellen Umgebungsparameter im Bereich der Schweißanlage 3 oder eine Neukonfigurierung der Kenngrößen des Schweißprozesses erfolgt, wodurch auf eigenständige Ausgabeeinrichtungen 241 gegebenenfalls verzichtet werden kann.

Es können zumindest Teile der Analyseeinrichtung 227, insbesondere der Sensor 228 und/ oder die Auswerteeinrichtung 239 und/oder die Ausgabeeinrichtung 241, am Bekleidungsmaterial 238, insbesondere einem Textilgewebematerial, dauerhaft oder lösbar befestigt sein. Hierbei können zumindest einige der am Bekleidungsmaterial 238 befestigten Teile der Anlyseeinrichtung 227 vollumfänglich umschlossen innerhalb einer Dicke des Bekleidungsmaterials 238 im Erfassungsbereich 229 zwischen der Außenoberfläche 244 und der Innenoberfläche 245 angeordnet sein, oder zumindest einige der am Bekleidungsmaterial 238 befestigten Teile der Analyseeinrichtung 227 an der Außenoberfläche 244 oder Innenoberfläche 245 des Bekleidungsmaterials 238 angeordnet sein. Die an der Außenoberfläche 244 oder Innenoberfläche 245 angeordneten Teile der Analyseeinrichtung 227 können dabei über eine Befestigungseinrichtung, beispielsweise einer Haltetasche, einer Verbindungseinrichtung, usw., gehalten sein, wobei derartige Ausgestaltungen von Befestigungseinrichtungen wie vorstehend beschrieben ausgebildet sein können.

Eine weitere Möglichkeit besteht darin, dass die Auswerteeinrichtung 239 und/oder die Ausgabeeinrichtung 241 in einer der Komponenten 5 der Schweißanlage 3 integriert ist, insbesondere die Auswerteeinrichtung 239 ein Teil der Steuereinrichtung 8 der Schweißstromquelle 5 ist und/oder die Ausgabeeinrichtung 241 beispielsweise am Schweißbrenner 14 angeordnet ist. Die Analyseeinrichtung 227 kann in diesem Fall an der Arbeitsbekleidung 1 eine Schnittstelle aufweisen, an die der zumindest eine Sensor 228 angebunden ist, wobei mit der Schnittstelle die Komponenten 5 der Schweißanlage 3 oder die Ausgabeeinrichtung 241 über die Übertragungsleitung 243 verbindbar sind. Die Schnittstelle ist beispielsweise als Stecker bzw. als Buchse zur Herstellung einer physischen Verbindung oder als Sende- und/ oder Empfangseinrichtung für eine drahtlose Verbindung ausgebildet.

Zu den in den Fig. 1 bis 16, insbesondere den Fig. 10 bis 16, beschriebenen Ausführungsbeispielen sei im Allgemeinen angemerkt, dass die eigenständigen Lösungen in Kombination an einer Arbeitsbekleidung 1 realisiert werden können, wobei eine derartige Zusammenführung der technischen Lösungen im Können des Fachmanns liegt. Die Schutzeinrichtung 128 bzw. Schutzzone 127 sowie die Analyseeinrichtung 227 können beispielsweise im Schulterbereich bzw. Nackenbereich, im Rückenbereich entlang der Wirbelsäule, im gesamten Kopfbereich, im Hüft- bzw. Lendenbereich, im Schweißbrenner dem nächstliegenden Arm bzw. Hand der Person 2 angeordnet bzw. wirksam sein, da diese Bereiche besonders empfindlichen Zonen des menschlichen Körpers darstellen.

Mit den vorliegenden erfindungsgemäßen Lösungen ist eine präventive Wirkung und eine Verbesserung der gesundheitserhaltenden Maßnahmen für eine Person 2, die sich im Bereich von Schweißanlagen 3 aufhält, gegeben. Durch das erfindungsgemäße Erkennen und Schützen von Personen 2 vor bei Schweißprozessen zwangsweise auftretenden, erhöhten Gesundheitsbelastungen ist ein Ergreifen von Gegenmaßnahmen möglich, wobei diese in der Eigenverantwortung der Personen 2 liegen können, oder durch die Schweißanlage 3 automatisch eingeleitet werden. Beispielsweise können Organisationen bzw. Personen, welche Schweißanlagen 3 zur Verwendung bereitstellen, aufgrund von an Benutzern der Schweißanlagen 3 auftretenden Gesundheitsschädigungen nicht belangt werden, da die Benutzer über gesundheitsgefährdende Zustände aktiv in Kenntnis gesetzt werden.

Selbstverständlich ist es auch möglich, dass in der Arbeitsbekleidung 1 die Sensoren 228 angeordnet sind und im Schweißgerät bzw. der Schweißanlage 3 die Auswerteeinrichtung 239 zur Auswertung der durch die Sensoren 228 erfassten Daten bzw. Parameter angeordnet ist. Somit werden über die Arbeitsbekleidung 1 lediglich die Daten erfasst und im Schweißgerät 3 anschließend analysiert. Es ist jedoch auch möglich, dass am Schweißgerät 3 entsprechende Sensoren 228 angeordnet sind, sodass auch die Umgebungsbedingungen im Bereich des Schweißgerätes 1 gemessen und ausgewertet werden können. Der detaillierte technische Aufbau der Analyseeinrichtung 227, insbesondere ein elektronischer Schaltungs- bzw. Hardwareaufbau der Einzelkomponenten, Programmlogiken, Steuer- und Regelabläufe, usw., kann einem aus dem Stand der Technik bekannten Aufbau, insbesondere auf dem Gebiet der Mess-, Steuer-, und Regeltechnik, entsprechen.

Der Ordnung halber sei abschließend darauf hingewiesen, dass zum besseren Verständnis des Aufbaus des Arbeitsbekleidung 1, des Fernreglers 4, der Komponente, 5, sowie des Systems zur Steuerung und/oder Regelung von Schweißanlagen 3, diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3, 4, 5; 6; 7, 8; 9; 10, 11, 12; 13; 14; 15; 16 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Arbeitsbekleidung | 41 | Schnittstellentreiber |
| 2 | Person | 42 | Übermittlungssystem |
| 3 | Schweißanlage | 43 | Bussystem |
| 4 | Fernregler | 44 | Steuereinrichtung |
| 5 | Komponente | 45 | Mikrokontroller |
| | | | |
| 6 | Stromquelle | 46 | Speichereinrichtung |
| 7 | Leistungsteil | 47 | Energieversorgungseinrichtung |
| 8 | Steuereinrichtung | 48 | Kommunikationseinrichtung |
| 9 | Umschaltglied | 49 | Übertragungselement |
| 10 | Steuerventil | 50 | Schnittstellentreiber |
| | | | |
| 11 | Versorgungsleitung | 51 | Gegenstelle |
| 12 | Gas | 52 | Kommunikationsnetzwerk |
| 13 | Gasspeicher | 53 | Gerät |
| 14 | Schweißbrenner | 54 | Ärmel |
| 15 | Drahtvorschubgerät | 55 | Oberhemd |
| | | | |
| 16 | Versorgungsleitung | 56 | Aufnahmeanordnung |
| 17 | Schweißdraht | 57 | Aufnahmetasche |
| 18 | Vorratstrommel | 58 | Aufnahmekammer |
| 19 | Lichtbogen | 59 | innere Oberfläche |
| 20 | Werkstück | 60 | Begrenzungsfläche |
| | | | |
| 21 | Schweißleitung | 61 | Innenlage |
| 22 | Schweißleitung | 62 | Deckschicht |
| 23 | Kühlkreislauf | 63 | Verbindungsbereich |
| 24 | Strömungswächter | 64 | Leiterplatte |
| 25 | Kühlmittelbehälter | 65 | Display |
| | | | |
| 26 | Ein- und/oder Ausgabeeinrichtung | 66 | Betätigungsbereich |
| 27 | Robotersystem | 67 | Anzeigebereich |
| 28 | Einstellpult | 68 | äußere Oberfläche |
| 29 | Bedieneinrichtung | 69 | Ausschnitt |
| 30 | Einstellorgan | 70 | Anzeigefläche |
| | | | |
| 31 | Ausgabeeinrichtung | 71 | Betätigungselement |
| 32 | erste Schnittstelle | 72 | Bereich |
| 33 | Anzeigemittel | 73 | Schutzhülle |
| 34 | Display | 74 | Kennzeichnung |
| 35 | weitere Schnittstelle | 75 | Finger |
| | | | |
| 36 | Steuerleitung | 76 | Batterie |
| 37 | Kommunikationsleitung | 77 | Leitung |
| 38 | Kommunikationsleitung | 78 | Leitung |
| 39 | Pfeil | 79 | Verbindungseinrichtung |
| 40 | Übertragungselement | 80 | Koppelelement |
| 81 | Koppelelement | 227 | Analyseeinrichtung |
| 82 | Kennwertgeber | 228 | Sensor |
| 83 | Transponder | 229 | Erfassungsbereich |
| 84 | Übertragungselement | 230 | Schutzschirm |
| 85 | Erregerelement | | |
| | | 231 | Schweißoverall |
| 86 | Induktionselement | 232 | Hand |
| 87 | Griffstück | 233 | Feldsensor |
| 88 | Handschuh | 234 | Gassensor |
| 89 | Mobiltelefon | 235 | Kopfbereich |
| 90 | Energiewandler | | |
| | | 236 | Temperatursensor |
| 91 | Druckelement | 237 | Hüft- bzw. Lendenbereich |
| 92 | Brille | 238 | Bekleidungsmaterial |
| 93 | Schuh | 239 | Auswerteeinrichtung |
| | | 240 | Ausgang |
| 127 | Schutzzone | | |
| 128 | Schutzeinrichtung | 241 | Ausgabeeinrichtung |
| 129. | Innenraum | 242 | Eingang |
| 130 | Schweißoverall | 243 | Anzeige |
| | | 244 | Außenoberfläche |
| 131 | Rumpfbereich | 245 | Innenoberfläche |
| 132 | Ärmelbereich | | |
| 133 | Hüft- bzw. Lendenbereich | 246 | Steuerleitung |
| 134 | Schirmungselement | | |
| 135 | Schirmungslage | | |
| | | | |
| 136 | Bekleidungsmaterial | | |
| 137 | Beschichtung | | |
| 138 | Außenoberfläche | | |
| 139 | Innenoberfläche | | |
| 140 | Geflecht bzw. Gewebe | | |
| | | | |
| 141 | Faser | | |
| 142 | Befestigungseinrichtung | | |
| 143 | Verbindungselement | | |
| 144 | Verbindungselement | | |
| 145 | Erdungsleiter | | |
| | | | |
| 146 | Kompensator | | |
| 147 | Felderzeuger | | |
| 148 | Leiter | | |
| 149 | Ringspule | | |
| 150 | Leitung | | |
| | | | |
| 151 | Leitung | | |
| 152 | Stromquelle | | |

## Patentansprüche

1. Arbeitsbekleidung (1), insbesondere Schweißschutzbekleidung, zumindest umfassend ein elektrisches Signalübertragungssystem, beispielsweise eine elektrische Schaltung und eine Energieversorgungseinrichtung (47), **dadurch gekennzeichnet, dass** das Signalübertragungssystem einen Fernregler (4) umfasst, der zumindest eine elektrische Schnittstelle (32) aufweist, die zur Herstellung einer elektrischen Wirkungsverbindung, insbesondere zur Durchführung einer Signal- und/oder Datenübertragung bzw. elektrischen Energieübertragung, mit ein oder mehreren Komponenten (5) einer Schweißanlage (3), beispielsweise einer Steuereinrichtung (8) einer Schweißstromquelle (6), einer Ein- und/oder Ausgabeeinrichtung (26) oder dergleichen, ausgebildet ist und der Fernregler (4) eine Steuereinrichtung (44), insbesondere einen Mikrokontroller (45) und elektrische Speichermittel (46), aufweist.

2. Arbeitsbekleidung nach Anspruch 1, **dadurch gekennzeichnet, dass** der Fernregler (4) ein elektrisches Koppelelement (80) und/oder eine mechanische Befestigungseinrichtung (79) aufweist, wobei das Koppelelement (80) zur Signal- und/oder Datenübertragung mit dem der Arbeitsbekleidung (1) zugeordneten elektrischen Signalübertragungssystem verbunden oder verbindbar ist und die Befestigungseinrichtung (79) mit der Arbeitsbekleidung (1) verbunden oder verbindbar ist.

3. Arbeitsbekleidung nach Anspruch 1 oder 2, **dadurch gekennzeichnet, dass** der Fernregler (4) eine Bedieneinrichtung (29) zur Eingabe bzw. zum Ablesen von Parametern der Schweißanlage (3) aufweist.

4. Arbeitsbekleidung nach Anspruch 3, **dadurch gekennzeichnet, dass** die Bedieneinrichtung (29) ein oder mehrere betätigbare Einstellorgane (30) und/oder eine beispielsweise optische oder akustische Ausgabeeinrichtung (31) umfasst.

5. Arbeitsbekleidung nach Anspruch 4, **dadurch gekennzeichnet, dass** der Fernregler (4) durch die Erzeugung von Steuersignalen bei Aktivierung bzw. Betätigung der Einstellorgane (30) zur Ein- bzw. Verstellung von Parametern, Funktionen und/oder Betriebsarten der Schweißanlage (3) ausgebildet ist und die Schnittstelle (32) zur Übermittlung der erzeugten Steuersignale an eine Komponente (5) der Schweißanlage (3) ausgebildet ist.

6. Arbeitsbekleidung nach einem der vorhergehenden Ansprüche, **dadurch gekennzeichnet, dass** die Schnittstelle (32) des Fernreglers (4) ein physisches Übertragungselement (40) zur Durchführung einer drahtlosen oder drahtgebundenen Signalübertragung zugeordnet ist.

7. Arbeitsbekleidung nach Anspruch 6, **dadurch gekennzeichnet, dass** das Übertragungselement (40) durch einen Transmitter/Receiver für elektromagnetische Wellen, eine induktives bzw. magnetisches koppelbares Element oder durch einen einpoligen oder mehrpoligen, Stecker bzw. eine derartige Buchse zum Anschluss einer Kommunikationsleitung (37,38) ausgebildet ist.

8. Arbeitsbekleidung nach einem der vorhergehenden Ansprüche, **dadurch gekennzeichnet, dass** der Fernregler (4) bzw. einzelne Module desselben dauerhaft oder lösbar in der Arbeitsbekleidung (1) integriert bzw. an dieser befestigt ist.

9. Arbeitsbekleidung nach einem der vorhergehenden Ansprüche, **dadurch gekennzeichnet, dass** der Fernreglers (4) in der Arbeitsbekleidung (1), beispielsweise in einem Handschuh, einem Oberhemd (55) wie einer Jacke bzw. Weste, einem Schuh, einer Hose, einer Kopfbedeckung, einer Strahlungs-Schutzeinrichtung (96) für Schweißarbeiten, einer Brille, einem Trageband- bzw. Schleife oder dgl., integriert bzw. an diesen angebracht ist.

10. Arbeitsbekleidung nach Anspruch 3, **dadurch gekennzeichnet, dass** zumindest die Bedieneinrichtung (29) des Fernreglers (4) im Bereich eines Ärmels (54) eines Oberhemdes (55) oder eines Handschuhs (88) vorgesehen ist.

11. Arbeitsbekleidung nach einem der Ansprüche 4 bis 10, **dadurch gekennzeichnet, dass** zumindest Betätigungs- bzw. Anzeigebereiche (66, 67) der Einstellorgane (30) bzw. Ausgabeeinrichtung (31) im Bereich einer äußeren Oberfläche (68) des Kleidungsstückes (1) frei zugänglich bzw. sichtbar angeordnet sind.

12. Arbeitsbekleidung nach einem der vorhergehenden Ansprüche, **dadurch gekennzeichnet, dass** die Arbeitsbekleidung (1) ein oder mehrere Befestigungsanordnungen (56), die zur Halterung bzw. Positionierung zumindest von Teilen des Fernreglers (4) vorgesehen sind, aufweist.

13. Arbeitsbekleidung nach Anspruch 12, **dadurch gekennzeichnet, dass** die Befestigungsanordnung (56) durch ein oder mehrere je Aufnahmekammern (58) ausbildende Aufnahmetaschen (57) gebildet ist, die gegebenenfalls ein oder mehrere Ausschnitte (69) an deren Umwandung, vorzugsweise im Bereich der äußeren Oberfläche (68) des Kleidungsstückes (1), aufweisen.

14. Arbeitsbekleidung nach Anspruch 13, **dadurch gekennzeichnet, dass** die Ausschnitte (69) zumindest den Betätigungsbereich (66) und/oder den Anzeigebereich (67) der in der Aufnahmekammer (58) angeordneten Einstellorgane (30) und/oder Ausgabeeinrichtung (31) nach außen hin freigeben, wobei die Ausschnitte (69) gegebenenfalls durch eine Schutzhülle (73) abgedeckt bzw. verschlossen sind.

15. Arbeitsbekleidung nach einem der Ansprüche 12 bis 14, **dadurch gekennzeichnet, dass** die Befestigungsanordnung (56) und/oder die Verbindungseinrichtung (79) durch koppelbare Befestigungselemente, beispielsweise Klett-, Clips-, Steckverbindungselernente oder dergleichen, ausgebildet sind.

16. Arbeitsbekleidung nach Anspruch 15, **dadurch gekennzeichnet, dass** die Befestigungsanordnung (56) und/oder die Verbindungseinrichtung (79) an einer äußeren Oberfläche (68) der Arbeitsbekleidung (1) und/oder außenseitig am Fernregler (4) angeordnet sind.

17. Arbeitsbekleidung nach einem der vorhergehenden Ansprüche, **dadurch gekennzeichnet, dass** an der äußeren Oberfläche (68) der Arbeitsbekleidung (1) zumindest im Bereich (72), der über den an der inneren Oberfläche (59) angeordneten Einstellorganen (30) liegt, optische. Kennzeichnungen (74), insbesondere funktionsbezogene Symbole bzw. Bezeichnungen zu den Einstellorganen (30), an- bzw. aufgebracht sind.

18. Arbeitsbekleidung nach einem der Ansprüche 2 bis 17, **dadurch gekennzeichnet, dass** der Fernregler (4) über das Koppelelement (80) mit der dem Signalübertragungssystem der Arbeitsbekleidung (1) zugeordneten Energieversorgungseinrichtung (47) bzw. elektrischen Schaltung verbindbar ist.

19. Arbeitsbekleidung nach einem der vorhergehenden Ansprüche, **dadurch gekennzeichnet, dass** der Fernregler (4) zu dessen Energieversorgung die elektrische Energieversorgungseinrichtung (47) aufweist oder der Fernregler (4) über die Schnittstelle (32) mit der einer Komponente (5) zugeordneten Energieversorgungseinrichtung (47) verbindbar ist.

20. Arbeitsbekleidung nach einem der vorhergehenden Ansprüche, **dadurch gekennzeichnet, dass** die Energieversorgungseinrichtung (47) als autarke Energiequelle, insbesondere als Batterie (76), vorgesehen ist.

21. Arbeitsbekleidung nach einem der vorhergehenden Ansprüche, **dadurch gekennzeichnet, dass** die Energieversorgungseinrichtung (47) batterielos ausgebildet ist.

22. Arbeitsbekleidung nach einem der vorhergehenden Ansprüche, **dadurch gekennzeichnet, dass** die Energieversorgungseinrichtung (47) als thermoelektrischer oder elektromechanischer Energiewandler (90), beispielsweise Peltier-, Piezoelement, usw., ausgebildet ist.

23. Arbeitsbekleidung nach einem der vorhergehenden Ansprüche, **dadurch gekennzeichnet, dass** die Energieversorgungseinrichtung (47) zur drahtlosen Signalübertragung mittels einer magnetischen Kopplung ausgebildet ist, wobei hierzu zumindest ein primärseitiges Erregerelement (85) sowie zumindest ein sekundärseitiges Induktionselement (86), insbesondere je in Form elektrischer Spulen, angeordnet ist.

24. Arbeitsbekleidung nach einem der vorhergehenden Ansprüche, **dadurch gekennzeichnet, dass** der Fernreglers (4) eine fremdgespeiste Energiequelle, insbesondere das sekundärseitiges Induktionselement (86) einer Transformatorschaltung, aufweist.

25. Arbeitsbekleidung nach einem der vorhergehenden Ansprüche, **dadurch gekennzeichnet, dass** der Fernregler (4) einen Kennwertgeber (82), insbesondere einen Transponder (83), der vorzugsweise batterielos ausgebildet ist und einen Mikrokontroller (45), eine Speichereinrichtung (46) und gegebenenfalls das Induktionselement (86) aufweist, umfasst.

26. Arbeitsbekleidung nach Anspruch 25, **dadurch gekennzeichnet, dass** das Induktionselement (86) bzw. der Kennwertgeber (82) im Bereich einer Hand bzw. im unteren Armbereich einer das Arbeitsbekleidung (1) tragenden Person (2), insbesondere im Bereich einer inneren Handfläche eines Handschuhs (88), angebracht ist.

27. Arbeitsbekleidung nach einem der vorhergehenden Ansprüche, **dadurch gekennzeichnet, dass** der Fernregler (4) eine Kommunikationseinrichtung (48) umfasst, die mit einer Gegenstelle (51) zur uni- oder bidirektionalen Kommunikation verbunden ist.

28. Arbeitsbekleidung nach Anspruch 27, **dadurch gekennzeichnet, dass** die Kommunikätionseinrichtung (48) zur Kommunikation mit einem Gerät (53), beispielsweise einem Ausgabegerät wie einem Bildschirm, einem Rechnersystem, einem Handheld- Computer, beispielsweise einem Palmtop oder einem Mobiltelefon (89), oder dergleichen, ausgebildet ist.

29. Arbeitsbekleidung nach einem der Ansprüche 27, 28, **dadurch gekennzeichnet, dass** die Kommunikationseinrichtung (48) zur Übermittlung von durch die Bedieneinrichtung (29) bzw. einer Komponente (5) der Schweißanlage (3) erzeugten Steuersignalen für eine Beeinflussung der Gegenstelle (51), insbesondere in Echtzeit, ausgebildet ist.

30. Arbeitsbekleidung nach einem der Ansprüche 27 bis 29, **dadurch gekennzeichnet, dass** als Kommunikationseinrichtung (48) eine drahtlose, insbesondere standardisierte, Datenübertragungsschnittstelle, beispielsweise eine Bluetooth-, WLAN-, Infrarot-Schnittstelle, vorgesehen ist.

31. Arbeitsbekleidung nach einem der Ansprüche 27 bis 30 **dadurch gekennzeichnet, dass** die Kommunikationseinrichtung (48) für die Kommunikation mit einem öffentlichen bzw. lokalen Kommunikationsnetzwerk (52), beispielsweise einem Internet oder Ethernet, vorgesehen ist, und der Kommunikationseinrichtung (48) Schnittstellentreiber (50) zur Umsetzung interner Steuersignale in ein Datenprotokoll, wie TCP/IP usw., zugeordnet sind.

32. Arbeitsbekleidung nach einem der vorhergehenden Ansprüche, **dadurch gekennzeichnet, dass** zumindest Teile des Fernreglers (4) an einer Leiterplatte (64) aus einem flexiblen bzw. verformbaren Bekleidungsmaterial, insbesondere einer polymeren Folie oder dgl., realisiert sind.

33. Arbeitsbekleidung nach einem der Ansprüche 4 bis 32, **dadurch gekennzeichnet, dass** das Einstellorgane (30) und/oder die Ausgabeeinrichtung (31) der Bedieneinrichtung (29) durch ein verformbares bzw. flexibles Bekleidungsmaterial, z.B. Kunststoffen bzw. Gummimischungen, gebildet sind.

34. Arbeitsbekleidung nach einem der vorhergehenden Ansprüche 4 bis 37, **dadurch gekennzeichnet, dass** die Einstellorgane (30) und/oder Ausgabeeinrichtung (31) und/oder die Steuereinrichtung (44) in der bevorzugt flexiblen bzw. verformbaren Leiterplatte (64) integriert sind.

35. Arbeitsbekleidung nach einem der vorhergehenden Ansprüche, **dadurch gekennzeichnet, dass** der Fernregler (4) zur Kommunikation mit zumindest einem speziellen Typ von Komponenten einer Schweißanlage (3), beispielsweise MIG/MAG, WIG, TIG, usw., ausgebildet ist.

36. Arbeitsbekleidung nach einem der vorhergehenden Ansprüche, **dadurch gekennzeichnet, dass** der Fernregler (4) Mittel, insbesondere eine Programmlogik, zur vorzugsweise automatischen Durchführung einer Konfiguration der Einstellmöglichkeiten in Abhängigkeit des durch den Fernregler (4) anzusprechenden Typs einer Schweißanlage (3) aufweist.

37. Arbeitsbekleidung nach einem der vorhergehenden Ansprüche, **dadurch gekennzeichnet, dass** das Signalübertragungssystem mehrere Fernregler (4) aufweist, die an unterschiedlichen Stellen der Arbeitsbekleidung (1) angeordnet sind.

38. Komponente (5) einer Schweißanlage (3), insbesondere Steuereinrichtung (8), Schweißstromquelle (6), Schweißbrenners (14), Ein- und/oder Ausgabeeinrichtung (26), usw., wobei diese mit einer Schnittstelle (35) ausgestattet ist, die zur Herstellung einer elektrischen Wirkungsverbindung, insbesondere Signal- bzw. Datenübertragung bzw. elektrischen Energieübertragung, zwischen der Arbeitsbekleidung (1) nach einem der Ansprüche 1 bis 37 und einer Steuereinrichtung (8) der Schweißanlage (3) ausgebildet ist.

39. Komponente nach Anspruch 38, **dadurch gekennzeichnet, dass** die Schnittstelle (35) ein physisches Übertragungselement (84) aufweist, das zur Herstellung der elektrischen Wirkungsverbindung drahtgebunden an eine Kommunikationsleitung (37) oder drahtlos an eine Schnittstelle (32) des Fernreglers (4) koppelbar ist.

40. Komponente nach Anspruch 39, **dadurch gekennzeichnet, dass** das Übertragungselement (84) durch einen Transmitter/Receiver für elektromagnetische Wellen, ein induktives Erreger- bzw. Induktionselement (85, 86), insbesondere eine elektrische Spule, oder einen Stecker bzw. eine Buchse zur Aufnahme der Kommunikatiotisleitung (37) ausgebildet ist.

41. Komponente nach einem der Ansprüche 38 bis 40, **dadurch gekennzeichnet, dass** eine der Komponente (5) zugeordnete Energieversorgungseiririchtung (47) mit der Schnittstelle (35) verbunden ist und die Schnittstelle (35) zur elektrischen Energieversorgung eines mit dieser verbundenen bzw. verbindbaren Fernreglers (4) ausgebildet ist.

42. System zur Steuerung und/.oder Regelung von Schweißanlagen (3), insbesondere Schweißstromquellen (6), wobei dieses eine Arbeitsbekleidung (1) nach einem der Ansprüche 1 bis 37 und zumindest eine Komponente (5) der Schweißanlage (3) nach einem der Ansprüche 38 bis 41 umfasst, wobei die Schweißanlage (3) eine Komponente (5) umfasst, und wobei der Fernregler (4) und die Komponente (5) zumindest zur Herstellung einer gegenseitigen elektrischen Wirkungsverbindung, insbesondere zur Signal- und/oder Datenübertragung bzw. elektrischen Energieübertragung, ausgebildet sind.

43. System nach Anspruch 42, **dadurch gekennzeichnet, dass** die elektrische Schnittstelle (35) der Komponente (5) das Übertragungselement (84) zur Herstellung einer uni- oder bidirektionalen Kommunikationsverbindung mit einer elektrischen Schnittstelle (32), insbesondere einem Überragungselement (40), des Fernreglers (4) aufweist.

44. System nach einem der Ansprüche 42 oder 43, **dadurch gekennzeichnet, dass** Übertragungsmittel (40, 84) des Fernreglers (4) und einer der Komponenten (5) für eine vorzugsweise drahtlose Kommunikation, beispielsweise über elektromagnetische Wellen oder eine magnetische Kopplung, ausgebildet ist.

45. System nach einem der Ansprüche 42 bis 44, **dadurch gekennzeichnet, dass** als Übertragungsmittel (40, 84) im Fernregler (4) bzw. einer der Komponenten (5), insbesondere in einem Schweißbrenner (14), zur Bildung einer Transformatorschaltung je zumindest ein Erreger- bzw. Induktionselement (85, 86) angeordnet ist.

46. System nach einem der Ansprüche 42 bis 45, **dadurch gekennzeichnet, dass** in der Komponente (5), insbesondere im Schweißbrenner (14), eine Energieversorgungseinrichtung (47) angeordnet ist, die mit dem Übertragungsmittel (84) zumindest zur Übertragung von elektrischer Energie, insbesondere Spannung bzw. Strom, und gegebenenfalls von Informationen verbunden ist.

47. System nach Anspruch 46, **dadurch gekennzeichnet, dass** die Schnittstelle (35) der Komponente (5) bzw. das Fernregler (4) ein Signalverarbeitungsmittel zur Übertragung bzw. analogen Aufbereitung von Informationen, beispielsweise Modulations-/Demodulationsmittel, aufweist.

## Claims

1. Work clothes (1), in particular welding protection clothes, comprising at least an electrical signal transmission system, for example, an electrical circuit and a power supply device (47), **characterised in that**, the signal transmission system comprises a remote controller (4), which has at least one electrical interface (32), which is designed for purposes of making an electrical operative connection, in particular for purposes of executing a signal and/or data transmission, and/or an electrical power transmission, with one or a plurality of components (5) of a welding plant (3), for example of a control device (8) of a welding power source (6), of an input and/or output device (26), or similar, and the remote controller (4) has a control device (44), in particular a microcontroller (45) and electrical storage means (46).

2. The work clothes in accordance with claim 1, **characterised in that**, the remote controller (4) has an electrical coupling element (80), and/or a mechanical attachment device (79), wherein the coupling element (80), for purposes of signal and/or data transmission, is connected, or can be connected, with the electrical signal transmission system assigned to the work clothes (1), and the attachment device (79) is connected, or can be connected, with the work clothes (1).

3. The work clothes in accordance with claim 1 or 2, **characterised in that**, the remote controller (4) has an operating device (29) for purposes of inputting and/or reading out parameters of the welding plant (3).

4. The work clothes in accordance with claim 3, **characterised in that**, the operating device (29) comprises one or a plurality of operable adjusters (30) and/or, for example, an optical or acoustic output device (31).

5. The work clothes in accordance with claim4, **characterised in that**, the remote controller (4) is designed for purposes of setting or adjusting parameters, functions and/or operating modes of the welding plant (3) by the generation of control signals with the activation or operation of the adjusters (30), and the interface (32) is designed for purposes of transmitting the generated control signals to a component (5) of the welding plant (3).

6. The work clothes in accordance with one of the preceding claims, **characterised in that**, the interface (32) of the remote controller (4) is assigned to a physical transmission element (40) for purposes of executing a wireless or wire-based signal transmission.

7. The work clothes in accordance with claim 6, **characterised in that**, the transmission element (40) is designed in the form of a transmitter/receiver for electromagnetic waves, in the form of an element that can be inductively or magnetically coupled, or in the form of a single-pole or multi-pole plug, or a connector of this kind, for purposes of connecting a communications cable (37, 38).

8. The work clothes in accordance with one of the preceding claims, **characterised in that**, the remote controller (4), or individual modules of the same, is permanently or detachably integrated into the work clothes (1), or is attached to the latter.

9. The work clothes in accordance with one of the preceding claims, **characterised in that**, the remote controller (4) is integrated into the work clothes (1), for example into a glove, an upper garment (55), such as a jacket or waistcoat, a shoe, a pair of trousers, a head covering, a radiation protection device (96) for welding work, a pair of goggles, a lanyard or strap, or similar, or is attached to one of these.

10. The work clothes in accordance with claim 3, **characterised in that**, at least the operating device (29) of the remote controller (4) is provided in the region of a sleeve (54) of an upper garment (55), or of a glove (88).

11. The work clothes in accordance with one of the claims 4 to 10, **characterised in that**, at least actuation or display regions (66, 67) of the adjusters (30), or of the output device (31) are arranged so as to be freely accessible or visible in the region of an outer surface (68) of the item of clothes (1).

12. The work clothes in accordance with one of the preceding claims, **characterised in that**, the work clothes (1) has one or a plurality of attachment arrangements (56), which are provided for the mounting and positioning of at least parts of the remote controller (4).

13. The work clothes in accordance with claim 12, **characterised in that**, the attachment arrangement (56) is formed by one or a plurality of accommodation pockets (57), in each case forming accommodation compartments (58), which have one or a plurality of openings (69), as required, on their walls, preferably in the region of the outer surface (68) of the item of clothes (1).

14. The work clothes in accordance with claim 13, **characterised in that**, the openings (69) expose at least the operating region (66) and/or the display region (67) of the adjusters (30) and/or output device (31) arranged in the accommodation compartment (58) to the outside environment, wherein the openings (69) are covered, i.e. sealed, by a protective covering (73), as required.

15. The work clothes in accordance with one of the claims 12 to 14, **characterised in that**, the attachment arrangement (56) and/or the connecting device (79) are designed in the form of attachment elements that can be coupled together, for example, Velcro fastening elements, clip or plug connecting elements, or similar.

16. The work clothes in accordance with claim 15, **characterised in that**, the attachment arrangement (56) and/or the connecting device (79) are arranged on an outer surface (68) of the work clothes (1) and/or externally on the remote controller (4).

17. The work clothes in accordance with one of the preceding claims, **characterised in that**, on the outer surface (68) of the work clothes (1), at least in the region (72), which is located above the adjusters (30) arranged on the inner surface (59), visual markings (74), in particular function-related symbols or designations for the adjusters (30), are fitted or applied.

18. The work clothes in accordance with one of the claims 2 to 17, **characterised in that**, the remote controller (4) can be connected via the coupling element (80) with the power supply device (47) and/or electrical circuit assigned to the signal transmission system of the work clothes (1).

19. The work clothes in accordance with one of the preceding claims, **characterised in that**, for its power supply the remote controller (4) has the electrical power supply device (47), or the remote controller (4) can be connected via the interface (32) with the power supply device (47) assigned to a component (5).

20. The work clothes in accordance with one of the preceding claims, **characterised in that**, the power supply device (47) is provided as an autonomous power source, in particular as a battery (76).

21. The work clothes in accordance with one of the preceding claims, **characterised in that**, the power supply device (47) is designed without a battery.

22. The work clothes in accordance with one of the preceding claims, **characterised in that**, the power supply device (47) is designed as a thermoelectrical or electromechanical energy converter (90), for example, a Peltier element, a piezo element, etc.

23. The work clothes in accordance with one of the preceding claims, **characterised in that**, the power supply device (47) is designed for purposes of wireless signal transmission by means of a magnetic coupling, wherein for this purpose at least one primary-side exciter element (85) is arranged together with at least one secondary-side induction element (86), each in particular in the form of electrical coils.

24. The work clothes in accordance with one of the preceding claims, **characterised in that**, the remote controller (4) has an externally-fed power source, in particular the secondary-side induction element (86) of a transformer circuit.

25. The work clothes in accordance with one of the preceding claims, **characterised in that**, the remote controller (4) comprises a characteristic value encoder (82), in particular, a transponder (83), which is preferably designed without batteries, and has a microcontroller (45), a storage device (46) and, if required, the induction element (86).

26. The work clothes in accordance with claim 25, **characterised in that**, the induction element (86) and/or the characteristic value encoder (82) is attached in the region of a hand, or in the lower arm region of a person (2) wearing the work clothes (1), in particular in the region of an inner hand surface of a glove (88).

27. The work clothes in accordance with one of the preceding claims, **characterised in that**, the remote controller (4) comprises a communications device (48), which is connected with a remote station (51) for purposes of unidirectional or bidirectional communication.

28. The work clothes in accordance with claim 27, **characterised in that**, the communications device (48) is designed for purposes of communication with a device (53), for example, an output device, such as a monitor screen, a computer system, a handheld computer, for example a palmtop, or a mobile telephone (89), or similar device.

29. The work clothes in accordance with one of the claims 27, 28 **characterised in that**, the communications device (48) is designed for purposes of transmitting control signals generated by the operating device (29) and/or a component (5) of the welding plant (3), so as to interact with the remote station (51), particularly in real-time.

30. The work clothes in accordance with one of the claims 27 to 29, **characterised in that**, a wireless, in particular a standard data transmission interface, for example a Bluetooth, WLAN, or infrared interface is provided as the communications device (48).

31. The work clothes in accordance with one of the claims 27 to 30, **characterised in that**, the communications device (48) is provided for communication with a public and/or local communications network (52), for example, an Internet or Ethernet, and interface drivers (50) are assigned to the communications device (48) for purposes of converting internal control signals into a data protocol, such as TCP/IP, etc.

32. The work clothes in accordance with one of the preceding claims, **characterised in that**, at least parts of the remote controller (4) are implemented on a circuit board (64) of a flexible and deformable clothes material, in particular a polymer film, or similar.

33. The work clothes in accordance with one of the claims 4 to 32, **characterised in that**, the adjusters (30) and/or the output device (31) of the operating device (29) are formed in terms of a deformable and flexible clothes material, e.g. plastics or rubber mixtures.

34. The work clothes in accordance with one of the claims 4 to 33, **characterised in that**, the adjusters (30) and/or the output device (31) and/or the control device (44) are integrated into the preferably flexible and deformable control board (64).

35. The work clothes in accordance with one of the preceding claims, **characterised in that**, the remote controller (4) is designed for purposes of communication with at least one particular type of component of a welding plant (3), e.g. MIG/MAG, WIG, TIG, etc.

36. The work clothes in accordance with one of the preceding claims, **characterised in that**, the remote controller (4) has means, in particular program logic, for purposes of preferably automatic execution of a configuration of the setting options as a function of the type of welding plant (3) to be addressed by means of the remote controller (4).

37. The work clothes in accordance with one of the preceding claims, **characterised in that**, the signal transmission system has a plurality of remote controllers (4), which are arranged at various positions on the work clothes (1).

38. A component (5) of a welding plant (3), in particular, a control device (8), a welding current source (6), a welding torch (14), an input and/or output device (26), etc., wherein the latter is fitted with an interface (35), which is designed for purposes of making an electrical operative connection, in particular signal and/or data transmission and/or electrical power transmission, between the work clothes (1) in accordance with one of the claims 1 to 37, and a control device (8) of the welding plant (3).

39. The component in accordance with claim 38, **characterised in that**, the interface (35) has a physical transmission element (84), which for purposes of making the electrical operative connection can be coupled in a wire-based manner to a communications cable (37), or wirelessly to an interface (32) of the remote controller (4).

40. The component in accordance with claim 39, **characterised in that**, the transmission element (84) is designed in the form of a transmitter/receiver for electromagnetic waves, in the form of an inductive exciter element and/or induction element (85, 86), in particular an electrical coil, or in the form of a plug or a connector, for purposes of accommodating the communications cable (37).

41. The component in accordance with one of the claims 38 to 40, **characterised in that**, a power supply device (47) assigned to the component (5) is connected with the interface (35), and the interface (35) is designed for purposes of providing an electrical power supply to a remote controller (4), which is connected, or can be connected, with the latter.

42. A system for the control and/or regulation of welding plants (3), in particular welding power sources (6), wherein the welding plant (3) comprises a component (5), and wherein the system comprises work clothes (1) in accordance with one of the claims 1 to 37, and at least one component (5) of the welding plant (3) in accordance with one of the claims 38 to 41, wherein the remote controller (4) and the component (5) are designed at least for purposes of making a mutual electrical operative connection, in particular for purposes of signal and/or data transmission and/or electrical power transmission.

43. The system in accordance with claim 42, **characterised in that**, the electrical interface (35) of the component (5) has the transmission element (84) for purposes of making a unidirectional or bidirectional communications connection with an electrical interface (32), in particular a transmission element (40), of the remote controller (4).

44. The system in accordance with one of the claims 42 or 43, **characterised in that**, transmission means (40, 84) of the remote controller (4), and one of the components (5) are designed for a preferably wireless communication, for example via electromagnetic waves, or a magnetic coupling.

45. The system in accordance with one of the claims 42 to 44, **characterised in that**, at least one exciter element and/or induction element (85, 86) is arranged in each case as transmission means (40, 84) in the remote controller (4) respectively in one of the components (5), in particular in a welding torch (14), for purposes of forming a transformer circuit.

46. The system in accordance with one of the claims 42 to 45, **characterised in that**, a power supply device (47) is arranged in the component (5), in particular in the welding torch (14), which power supply device is connected with the transmission means (84), at least for purposes of transmitting electrical energy, in particular voltage and/or current, and information, as required.

47. The system in accordance with claim 46, **characterised in that**, the interface (35) of the component (5) and/or the remote controller (4) has a signal processing means, for example modulation/demodulation means, for purposes of transmission and/or analogue preparation of information.

## Revendications

1. Vêtement de travail (1), en particulier vêtement de protection pour travaux de soudage, comprenant au moins un système électrique de transmission de signaux, par exemple un circuit électrique et un dispositif d'alimentation en énergie (47), **caractérisé en ce que** le système de transmission de signaux comprend un régulateur à distance (4) qui présente au moins une interface électrique (32) qui est constituée pour l'établissement d'une liaison active électrique, en particulier pour la réalisation d'une transmission de signaux et/ou de données ou respectivement d'une transmission d'énergie électrique, avec un ou plusieurs composants (5) d'une installation de soudage (3), par exemple d'un dispositif de commande (8) d'une source de courant de soudage (6), d'un dispositif d'entrée et/ou de sortie (26) ou similaire, et le régulateur à distance (4) présente un dispositif de commande (44), en particulier un microcontrôleur (45) et des moyens d'accumulation électriques (46).

2. Vêtement de travail selon la revendication 1, **caractérisé en ce que** le régulateur à distance (4) présente un élément de couplage (80) électrique et/ou un dispositif de fixation (79) mécanique, l'élément de couplage électrique (80) étant ou pouvant être, pour la transmission de signaux et/ou de données, raccordé au système de transmission de signaux électrique affecté au vêtement de travail (1), et le dispositif de fixation (79) étant raccordé ou pouvant être raccordé au vêtement de travail (1).

3. Vêtement de travail selon la revendication 1 ou 2, **caractérisé en ce que** le régulateur à distance (4) présente un dispositif de manoeuvre (29) pour l'entrée ou respectivement pour la lecture de paramètres de l'installation de soudage (3).

4. Vêtement de travail selon la revendication 3, **caractérisé en ce que** le dispositif de manoeuvre (29) comprend un ou plusieurs organes de réglage (30) pouvant être activés et/ou un dispositif de sortie (31) par exemple optique ou acoustique.

5. Vêtement de travail selon la revendication 4, **caractérisé en ce que** le régulateur à distance (4) est, par la production de signaux de commande lors de l'activation ou respectivement de l'actionnement des organes de réglage (30), constitué pour le réglage ou respectivement le changement de paramètres, fonctions et/ou modes de fonctionnement de l'installation de soudage (3), et l'interface (32) est constituée pour le transfert des signaux de commande produits vers un composant (5) de l'installation de soudage (3).

6. Vêtement de travail selon l'une des revendications précédentes, **caractérisé en ce qu'**un élément de transmission (40) physique pour la réalisation d'une transmission de signaux sans fil ou câblée est affectée à l'interface (32) du régulateur à distance (4).

7. Vêtement de travail selon la revendication 6, **caractérisé en ce que** l'élément de transmission (40) est constitué par un émetteur/récepteur d'ondes électromagnétiques, un élément inductif ou respectivement magnétique pouvant être couplé ou par un connecteur à pôle unique ou à pôles multiples ou respectivement une prise de ce type pour la connexion d'une ligne de communication (37, 38).

8. Vêtement de travail selon l'une des revendications précédentes, **caractérisé en ce que** le régulateur à distance (4) ou respectivement différents modules de celui-ci est/sont intégré(s) de façon durable ou détachable dans le vêtement de travail (1) ou respectivement est/sont fixé(s) à celui-ci.

9. Vêtement de travail selon l'une des revendications précédentes, **caractérisé en ce que** le régulateur à distance (4) est intégré au vêtement de travail (1) ou est mis en place sur celui-ci, par exemple dans un gant, une chemise (55) telle qu'une veste ou respectivement un gilet, une chaussure, un pantalon, un couvre-chef, un dispositif de protection anti-rayonnement (96) pour travaux de soudage, des lunettes, une bandoulière ou boucle ou similaire.

10. Vêtement de travail selon la revendication 3, **caractérisé en ce qu'**au moins le dispositif de manoeuvre (29) du régulateur à distance (4) est prévu dans la zone d'une manche (54) de chemise (55) ou d'un gant (88).

11. Vêtement de travail selon l'une des revendications 4 à 10, **caractérisé en ce qu'**au moins des zones d'actionnement ou respectivement d'affichage (66, 67) des organes de réglage (30) ou respectivement du dispositif de sortie (31) sont disposées de façon librement accessible ou respectivement visible dans la zone d'une surface extérieure (68) de la pièce de vêtement (1).

12. Vêtement de travail selon l'une des revendications précédentes, **caractérisé en ce que** le vêtement de travail (1) présente un ou plusieurs agencements de fixation (56) qui sont prévus pour la retenue ou respectivement le positionnement au moins de parties du régulateur à distance (4).

13. Vêtement de travail selon la revendication 12, **caractérisé en ce que** l'agencement de fixation (56) est formé d'une ou de plusieurs poches de réception (57), formant respectivement une ou plusieurs chambres de réception (58), qui présentent éventuellement une ou plusieurs découpes (69) au niveau de leur périphérie, de préférence dans la zone de la surface extérieure (68) de la pièce de vêtement (1).

14. Vêtement de travail selon la revendication 13, **caractérisé en ce que** les découpes (69) libèrent vers l'extérieur au moins la zone d'actionnement (66) et/ou la zone d'affichage (67) des organes de réglage (30) et/ou du dispositif de sortie (31) disposés dans la chambre de réception (58), les découpes (69) étant recouvertes ou respectivement fermées éventuellement par une enveloppe de protection (73).

15. Vêtement de travail selon l'une des revendications 12 à 14, **caractérisé en ce que** l'agencement de fixation (56) et/ou le dispositif de raccordement (79) sont constitués d'éléments de fixation pouvant être couplés, par exemple des éléments de raccordement par crochets et boucles, par clips, par connecteurs ou similaires.

16. Vêtement de travail selon la revendication 15, **caractérisé en ce que** l'agencement de fixation (56) et/ou le dispositif de raccordement (79) sont disposés sur une surface extérieure (68) du vêtement de travail (1) et/ou côté extérieur sur le régulateur à distance (4).

17. Vêtement de travail selon l'une des revendications précédentes, **caractérisé en ce que**, sur la surface extérieure (68) du vêtement de travail (1), au moins dans la zone (72) qui est située au-dessus des organes de réglage (30) disposés sur la surface intérieure (59), des identifications (74) optiques, en particulier des symboles ou respectivement désignations se rapportant à la fonction concernant les organes de réglage (30) sont appliqués ou respectivement mis en place.

18. Vêtement de travail selon l'une des revendications 2 à 17, **caractérisé en ce que** le régulateur à distance (4) peut, par le biais de l'élément de couplage (80) électrique, être accordé au dispositif d'alimentation en énergie (47) ou respectivement au circuit électrique affecté au système de transmission de signaux du vêtement de travail (1).

19. Vêtement de travail selon l'une des revendications précédentes, **caractérisé en ce que** le régulateur à distance (4) présente le dispositif d'alimentation en énergie (47) électrique pour son alimentation en énergie ou **en ce que** le régulateur à distance (4) peut, par le biais de l'interface (32), être raccordé au dispositif d'alimentation en énergie (47) affecté à un composant (5).

20. Vêtement de travail selon l'une des revendications précédentes, **caractérisé en ce que** le dispositif d'alimentation en énergie (47) est prévu en tant que source d'énergie indépendante, en particulier en tant que batterie (76).

21. Vêtement de travail selon l'une des revendications précédentes, **caractérisé en ce que** le dispositif d'alimentation en énergie (47) est constitué sans batterie.

22. Vêtement de travail selon l'une des revendications précédentes, **caractérisé en ce que** le dispositif d'alimentation en énergie (47) est constitué en tant que convertisseur d'énergie (90) thermoélectrique ou électromécanique, par exemple en tant qu'élément Peltier, élément piézoélectrique, etc.

23. Vêtement de travail selon l'une des revendications précédentes, **caractérisé en ce que** le dispositif d'alimentation en énergie (47) est constitué pour la transmission de signaux sans fil au moyen d'un couplage magnétique, au moins un élément d'excitation (85) côté primaire ainsi que au moins un élément d'induction (86) côté secondaire, en particulier respectivement sous forme de bobines électriques, étant disposés à cet effet.

24. Vêtement de travail selon l'une des revendications précédentes, **caractérisé en ce que** le régulateur à distance (4) présente une source d'énergie alimentée par des dispositifs externes, en particulier l'élément d'induction (86) côté secondaire d'un circuit de transformateur.

25. Vêtement de travail selon l'une des revendications précédentes, **caractérisé en ce que** le régulateur à distance (4) comprend un transmetteur de valeurs caractéristiques (82), en particulier un transpondeur (83), qui est constitué de préférence sans batterie, et qui présente un microcontrôleur (45), un dispositif d'accumulateur (46) et éventuellement l'élément d'induction (86).

26. Vêtement de travail selon la revendication 25, **caractérisé en ce que** l'élément d'induction (86) ou respectivement le transmetteur de valeurs caractéristiques (82) est mis en place dans la zone d'une main ou respectivement dans la zone inférieure de bras d'une personne (2) portant le vêtement de travail (1), en particulier dans la zone d'une paume d'un gant (88).

27. Vêtement de travail selon l'une des revendications précédentes, **caractérisé en ce que** le régulateur à distance (4) comprend un dispositif de communication (48) qui est raccordé à un poste correspondant (51) en vue de la communication unidirectionnelle ou bidirectionnelle.

28. Vêtement de travail selon la revendication 27, **caractérisé en ce que** le dispositif de communication (48) est constitué pour la communication avec un appareil (53), par exemple un appareil de sortie tel qu'un écran, un système d'ordinateur, un ordinateur portatif, par exemple un ordinateur palmaire ou un téléphone mobile (89), ou similaire.

29. Vêtement de travail selon l'une des revendications 27, 28, **caractérisé en ce que** le dispositif de communication (48) est constitué pour le transfert de signaux de commande produits par le dispositif de manoeuvre (29) ou respectivement un composant (5) de l'installation de soudage (3) pour agir sur le poste correspondant (51),en particulier en temps réel.

30. Vêtement de travail selon l'une des revendications 27 à 29, **caractérisé en ce que**, en tant que dispositif de communication (48), il est prévu une interface de transmission de données sans fil, en particulier standardisée, par exemple une interface Bluetooth, WLAN, infrarouge.

31. Vêtement de travail selon l'une des revendications 27 à 30, **caractérisé en ce que** le dispositif de communication (48) est prévu pour la communication avec un réseau de communication (52) public ou respectivement local, par exemple Internet ou Ethernet, et des pilotes d'interface (50) sont affectés au dispositif de communication (48) pour la conversion de signaux de commande internes dans un protocole de données, comme TCP/IP, etc.

32. Vêtement de travail selon l'une des revendications précédentes, **caractérisé en ce qu'**au moins des parties du régulateur à distance (4) sont réalisées sur un circuit imprimé (64) en matériau de revêtement flexible ou respectivement déformable, en particulier une feuille polymère ou similaire.

33. Vêtement de travail selon l'une des revendications 4 à 32, **caractérisé en ce que** les organes de réglage (30) et/ou le dispositif de sortie (31) du dispositif de manoeuvre (29) sont formés d'un matériau de revêtement déformable ou respectivement flexible, par exemple des matières plastiques ou des mélanges de caoutchouc.

34. Vêtement de travail selon l'une des revendications 4 à 33, **caractérisé en ce que** les organes de réglage (30) et/ou le dispositif de sortie (31) et/ou le dispositif de commande (44) sont intégrés dans le circuit imprimé (64) de préférence flexible ou respectivement déformable.

35. Vêtement de travail selon l'une des revendications précédentes, **caractérisé en ce que** le régulateur à distance (4) est constitué pour la communication avec au moins un type spécial de composants d'une installation de soudage (3), par exemple MIG/MAG, WIG, TIG, etc.

36. Vêtement de travail selon l'une des revendications précédentes, **caractérisé en ce que** le régulateur à distance (4) présente des moyens, en particulier une logique de programme, pour la réalisation de préférence automatique d'une configuration des possibilités de réglage en fonction du type d'installation de soudage (3) devant être sollicité par le régulateur à distance (4).

37. Vêtement de travail selon l'une des revendications précédentes, **caractérisé en ce que** le système de transmission de signaux présente plusieurs régulateurs à distance (4) qui sont disposés sur différents emplacements du vêtement de travail (1).

38. Composant (5) d'une installation de soudage (3), en particulier dispositif de commande (8), source de courant de soudage (6), torche de soudage (14), dispositif d'entrée et/ou de sortie (26), etc., celui-ci étant équipé d'une interface (35) qui est constituée pour l'établissement d'une liaison active électrique, en particulier d'une transmission de signaux et/ou de données ou respectivement d'une transmission d'énergie électrique, entre le vêtement de travail (1) selon une des revendications 1 à 37 et un dispositif de commande (8) de l'installation de soudage (3).

39. Composant selon la revendication 38, **caractérisé en ce que** l'interface (35) présente un élément de transmission (84) physique qui, pour l'établissement de la liaison active électrique, peut être couplé de façon câblée à une ligne de communication (37), ou sans fil à une interface (32) du régulateur à distance (4).

40. Composant selon la revendication 39, **caractérisé en ce que** l'élément de transmission (84) est constitué d'un émetteur/récepteur d'ondes électromagnétiques, d'un élément d'excitation ou respectivement d'induction (85, 86), en particulier une bobine électrique, ou d'un connecteur ou respectivement d'une prise pour la réception de la d'une ligne de communication (37).

41. Composant selon l'une des revendications 38 à 40, **caractérisé en ce qu'**un dispositif d'alimentation en énergie (47) affecté au composant (5) est raccordé à l'interface (35) et **en ce que** l'interface (35) est constituée pour l'alimentation en énergie électrique d'un régulateur à distance (4) raccordé ou pouvant être raccordé à celle-ci.

42. Système de commande et/ou de régulation d'installations de soudage (3), en particulier de sources de courant de soudage (6), ce système comprenant un vêtement de travail (1) selon l'une des revendications 1 à 37 et au moins un composant (5) de l'installation de soudage (3) selon l'une des revendications 38 à 41, l'installation de soudage (3) comprenant un composant (5), et le régulateur à distance (4) et le composant (5) étant constitués au moins pour l'établissement d'une liaison active électrique réciproque, en particulier pour la transmission de signaux et/ou de données ou respectivement pour la transmission d'énergie électrique.

43. Système selon la revendication 42, **caractérisé en ce que** l'interface (35) électrique du composant (5) présente l'élément de transmission (84) pour l'établissement d'un raccordement de communication unidirectionnel ou bidirectionnel à une interface électrique (32), en particulier à un élément de transmission (40), du régulateur à distance (4).

44. Système selon l'une des revendications 42 ou 43, **caractérisé en ce que** le moyen de transmission (40, 84) du régulateur à distance (4) et d'un des composants (5) est constitué pour une communication de préférence sans fil, par exemple par le biais d'ondes électromagnétiques ou d'un couplage magnétique.

45. Système selon l'une des revendications 42 à 44, **caractérisé en ce que**, en tant que moyen de transmission (40, 84), respectivement au moins un élément d'excitation ou respectivement d'induction (85, 86) est disposé dans le régulateur à distance (4) ou respectivement dans un des composants (5), en particulier dans une torche de soudage (14), pour la formation d'un circuit de transformateur.

46. Système selon l'une des revendications 42 à 45, **caractérisé en ce que**, dans le composant (5), en particulier dans la torche de soudage (14), il est disposé un dispositif d'alimentation en énergie (47) qui est raccordé au moyen de transmission (84) au moins pour la transmission de l'énergie électrique, en particulier de la tension ou respectivement de l'intensité, et éventuellement d'informations.

47. Système selon la revendication 46, **caractérisé en ce que** l'interface (35) du composant (5) ou respectivement le régulateur à distance (4) présente un moyen de traitement de signaux pour la transmission ou respectivement pour le traitement analogique d'informations, par exemple des moyens de modulation/démodulation.
